# EUROPEAN PATENT SPECIFICATION

(11) **EP 2 293 411 B1**
(45) Date of publication and mention of the grant of the patent: **15.12.2021**
(21) Application number: 10009144.6
(22) Date of filing: 02.09.2010
(51) Int. Cl.: H02J 50/12, H02M 7/5381, H02M 7/539, H02M 7/48

(54) **Wireless power feeder and wireless power transmission system**
Drahtloses Stromversorgungsgerät und drahtloses Energieübertragungssystem
Alimentation électrique sans fil et système de transmission d'énergie électrique sans fil

(30) Priority: 03.09.2009 JP 2009203984; 08.09.2009 JP 2009206754; 29.06.2010 JP 2010147538; 29.06.2010 JP 2010147539
(43) Date of publication of application: 09.03.2011
(73) Proprietor: TDK Corporation, Tokyo 108-0023 (JP)
(72) Inventor: Urano, Takashi, Tokyo 103-8272 (JP)
(74) Representative: Glawe, Delfs, Moll

(56) References cited:
- WO-A1-2009/009559
- WO-A2-2009/065099
- JP-A- H10 225 129
- US-A- 5 723 989
- US-A1- 2006 069 522
- US-A1- 2006 239 043
- US-A1- 2008 043 505
- US-A1- 2008 157 692

## Description

### BACKGROUND OF THE INVENTION

### --Field of the Invention

The present invention relates to a wireless power feeder for feeding power by wireless and a wireless power transmission system.

### --Description of Related Art

A wireless power feeding technique of feeding power without a power cord is now attracting attention. The current wireless power feeding technique is roughly divided into three: (A) type utilizing electromagnetic induction (for short range) ; (B) type utilizing radio wave (for long range); and (C) type utilizing resonance phenomenon of magnetic field (for intermediate range) .

The type (A) utilizing electromagnetic induction has generally been employed in familiar home appliances such as an electric shaver; however, it can be effective only in a short range of several centimeters. The type (B) utilizing radio wave is available in a long range; however, it cannot feed big electric power. The type (C) utilizing resonance phenomenon is a comparatively new technique and is of particular interest because of its high power transmission efficiency even in an intermediate range of about several meters. For example, a plan is being studied in which a receiving coil is buried in a lower portion of an EV (Electric Vehicle) so as to feed power from a feeding coil in the ground in a non-contact manner. Hereinafter, the type (C) is referred to as "magnetic field resonance type".

The magnetic field resonance type is based on a theory published by Massachusetts Institute of Technology in 2006 (refer to Patent Document 1). In Patent Document 1, four coils are prepared. The four coils are referred to as "exciting coil", "feeding coil", "receiving coil", and "loading coil" in the order starting from the feeding side. The exciting coil and feeding coil closely face each other for electromagnetic coupling. Similarly, the receiving coil and loading coil closely face each other for electromagnetic coupling. The distance (intermediate distance) between the feeding coil and receiving coil is larger than the distance between the exciting coil and feeding coil and distance between the receiving coil and loading coil. This system aims to feed power from the feeding coil to receiving coil.

When AC power is fed to the exciting coil, current also flows in the feeding coil according to the principle of electromagnetic induction. When the feeding coil generates a magnetic field to cause the feeding coil and receiving coil to magnetically resonate, large current flows in the receiving coil. At this time, current also flows in the loading coil according to the principle of electromagnetic induction, and power is taken out from a load R connected in series to the loading coil. By utilizing the magnetic field resonance phenomenon, high power transmission efficiency can be achieved even if the feeding coil and receiving coil are largely spaced from each other.

### [Citation List]

### [Patent Document]

[Patent Document 1] U.S. Pat. Appln. Publication No. 2008/0278264
[Patent Document 2] Jpn. Pat. Appln. Laid-Open No. 2006-230032
[Patent Document 3] International Publication Pamphlet No. WO2006/022365
[Patent Document 4] U.S. Pat. Appln. Publication No. 2009/0072629.

Further prior art can be found in WO 2009/065099 A2, JP H10 225129 A and US 2006/239043 A1.

In order to generate the magnetic field resonance phenomenon, the drive frequency of a power circuit needs to be made to coincide with the resonance frequency when AC power is fed to the exciting coil and feeding coil. For example, Patent Document 2 discloses a technique of detecting whether the drive frequency and resonance frequency coincide with each other. More specifically, in Patent Document 2, the voltage phase of a primary coil L1 corresponding to the feeding coil is compared to a reference phase to thereby detect whether a resonance state exists or not (refer to paragraphs [0043] and [0044] and FIG. 1 of Patent Document 2). However, in the case of Patent Document 2, the voltage waveform itself of the primary coil L1 to be resonated is measured, the resonance characteristics (Q-value) is easily be degraded by the measurement procedure. In other words, a system configuration disclosed in patent Document 2 is susceptible to the measurement procedure.

### SUMMARY

The present invention has been made in view of the above problem, and a main object thereof is to detect the phase of feed power while suppressing influence on the resonance characteristic in a wireless power feeding technique of a magnetic resonance type. This object is achieved by the independent claims 1 and 7. Advantageous embodiments of the present invention are given in the dependent claims.

A wireless power feeder according to a first aspect which is not part of the present invention feeds power by wireless from a feeding coil to a receiving coil at the resonance frequency of the feeding coil and receiving coil. The wireless power feeder includes: a power circuit; a feeding coil; an exciting coil that is magnetically coupled to the feeding coil and feeds AC power fed from the power circuit to the feeding coil; and a phase detection circuit that detects the phase difference between the voltage phase and current phase of the AC power fed from the power circuit. The power circuit includes first and second current paths and makes first and second switches connected in series respectively to the first and second current paths alternately conductive to feed the AC power to the exciting coil. The phase detection circuit measures the phase of current passing through both or one of the first and second switches to achieve measurement of the current phase of the AC power.

A wireless power feeder according to a second aspect which is not part of the present invention also feeds power by wireless from a feeding coil to a receiving coil at the resonance frequency of the feeding coil and receiving coil. The wireless power feeder includes: a power circuit that feeds AC power to the feeding coil at the drive frequency; a feeding coil circuit that includes the feeding coil and a capacitor and resonate at the resonance frequency; and a phase detection circuit that detects the phase difference between the voltage phase and current phase of the AC power fed from the power circuit. The power circuit includes first and second current paths and makes first and second switches connected in series respectively to the first and second current paths alternately conductive to feed the AC power to the feeding coil. The phase detection circuit measures the phase of current passing through both or one of the first and second switches to achieve measurement of the current phase of the AC power.

The use of the power circuit that operates as a switching power source for the feeding coil can enhance the efficiency of power transmission from the power circuit to feeding coil. When the drive frequency of the power circuit and resonance frequency are made coincide with each other, the power transmission efficiency in the entire system can be enhanced. The current phase is measured from current passing through a switch included in the power circuit, so that a measurement load is not directly applied to the feeding coil. Thus, it is possible to monitor whether a resonance state is maintained by detecting the phase difference between the voltage phase and current phase while suppressing influence on the resonance characteristics of the feeding coil.

The wireless power feeder may further include a drive frequency tracking circuit that adjusts the drive frequency of the power circuit so as to reduce the detected phase difference to allow the drive frequency to track the resonance frequency. In this case, it is possible to allow the drive frequency to track the resonance frequency, thereby making it easy to maintain high power transmission efficiency.

The first and second switches may each be a field-effect transistor. In this case, the phase detection circuit may measure the current phase from a change in voltage applied to first resistors that are connected in series between the source and ground of the first switch and between the source and ground of the second switch. Further, the phase detection circuit may measure the voltage phase from a change in the source-drain voltage of both or one of the first and second switches. The phase detection circuit may measure the voltage phase from a change in intermediate potential taken from the middle of second resistors that are connected in parallel to the source-drain of both or one of the first and second switches.

The wireless power feeder may further include: a first waveform rectifier that converts an analog waveform having the same phase as that of a current waveform of the AC power into a digital waveform; and a second waveform rectifier that converts an analog waveform having the same phase as that of a voltage waveform of the AC power into a digital waveform. The phase detection circuit may compare the edges of two digital waveforms to detect the phase difference. The digitization makes clear the reference point used for comparing a current waveform and a voltage waveform, making it easy for the phase detection circuit to identify the phase difference.

A wireless power feeder according to a third aspect which is part of the present invention is given by independent claim 1.

This wireless power feeder can directly drive the feeding coil without use of the exciting coil. This contributes to a reduction in the manufacturing cost and size of the wireless power feeder. When the drive frequency of the power circuit and resonance frequency are made coincide with each other, the power transmission efficiency in the entire system can be enhanced. Inductive current is made to occur in the second coil (detection coil) by means of a magnetic field generated by AC current, and the current phase is measured from the inductive current, so that a measurement load is not directly applied to the feeding coil. Thus, it is possible to monitor whether a resonance state is maintained by detecting the phase difference (deviation) between the voltage phase and current phase while suppressing influence on the resonance characteristics of the feeding coil.

A current path passing through the first and second switches and a current path passing through the resonance circuit may be separated by a coupling transformer. AC power may be fed to the resonance circuit through the coupling transformer.

The wireless power feeder may further include a drive frequency tracking circuit that adjusts the drive frequency of the power transmission control circuit so as to reduce the detected phase difference to allow the drive frequency to track the resonance frequency. In this case, it is possible to allow the drive frequency to track the resonance frequency, thereby making it easy to maintain high power transmission efficiency.

The power transmission control circuit may make a coil in the resonance circuit operate not as the feeding coil but as the exciting coil so as to feed power to another coil serving as a feeding coil.

The second coil may be wounded around a toroidal core. A part of the first coil may be made to pass through the toroidal core to constitute a coupling transformer by the first and second coils. By sharing the toroidal core between the first and second coils, it is possible to allow the second coil to satisfactorily generate the inductive current.

A resistor may be connected in parallel to both ends of the second coil. The phase detection circuit may measure the current phase from a change in voltage applied to the resistor.

The wireless power feeder may further include: a first waveform rectifier that converts an analog waveform having the same phase as that of a current waveform of the AC power into a digital waveform; and a second waveform rectifier that converts an analog waveform having the same phase as that of a voltage waveform of the AC power into a digital waveform. The phase detection circuit compares the edges of two digital waveforms to detect the phase difference. The digitization makes clear the reference point used for comparing a current waveform and a voltage waveform, making it easy for the phase detection circuit to identify the phase difference.

A wireless power feeder according to a fourth aspect which is part of the present invention is given by independent claim 7.

A wireless power feeder according to a fifth aspect which is not part of the present invention also feeds power by wireless from a feeding coil to a receiving coil at the resonance frequency of the feeding coil and receiving coil. The wireless power feeder includes: a power circuit that feeds AC power to the feeding coil at the drive frequency; a feeding coil circuit that includes the feeding coil and a capacitor and resonate at the resonance frequency; a detection coil that generates inductive current using a magnetic field generated by the AC power of the feeding coil circuit; and a phase detection circuit that detects the phase difference between the voltage phase and current phase of the AC power. The power circuit includes first and second current paths and makes first and second switches connected in series respectively to the first and second current paths alternately conductive to feed the AC power to the feeding coil circuit. The phase detection circuit measures the phase of inductive current passing through the detection coil to achieve measurement of the current phase of the AC power.

In such a configuration, when the drive frequency of the power circuit and resonance frequency are made coincide with each other, the power transmission efficiency in the entire system can be enhanced. The current phase is measured from the inductive current of the detection coil, so that a measurement load is not directly applied to the feeding coil.

The detection coil may generate the inductive current using a magnetic field generated by the AC power flowing through the feeding coil or may generate the inductive current using a magnetic field generated by the AC power flowing through the exciting coil.

The wireless power feeder also may further include a drive frequency tracking circuit that adjusts the drive frequency so as to reduce the detected phase difference to allow the drive frequency to track the resonance frequency. In this case, it is possible to allow the drive frequency to track the resonance frequency, thereby making it easy to maintain high power transmission efficiency.

The detection coil may be wounded around a toroidal core. A part of the feeding coil or exciting coil may be made to pass through the toroidal core to constitute a coupling transformer by one of the feeding and exciting coils and detection coil. Further, the phase detection circuit may measure the current phase from a change in voltage applied to a resistor connected in parallel to both ends of the detection coil.

This wireless power feeder also may further include: a first waveform rectifier that converts an analog waveform having the same phase as that of a current waveform of the AC power into a digital waveform; and a second waveform rectifier that converts an analog waveform having the same phase as that of a voltage waveform of the AC power into a digital waveform. The phase detection circuit may compare the edges of two digital waveforms to detect the phase difference.

A wireless power transmission system according to the present invention includes: one of the wireless power feeders according to claim 1 or 7; a receiving coil; and a loading coil that is magnetically coupled to the receiving coil and receives power that the receiving coil has received from the feeding coil.

It is to be noted that any arbitrary combination of the above-described structural components and expressions changed between a method, an apparatus, a system, etc. are all effective as and encompassed by the present embodiments.

According to the present invention, it is possible to detect the phase of supply power while suppressing influence on the resonance characteristics in a wireless power feeding technique of a magnetic resonance type.

### BRIEF DESCRIPTION OF THE DRAWINGS

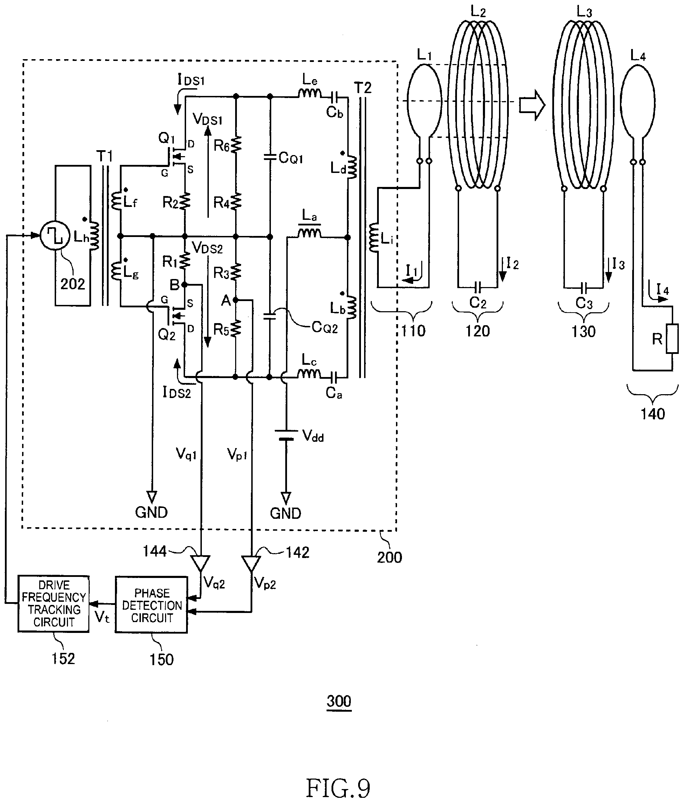

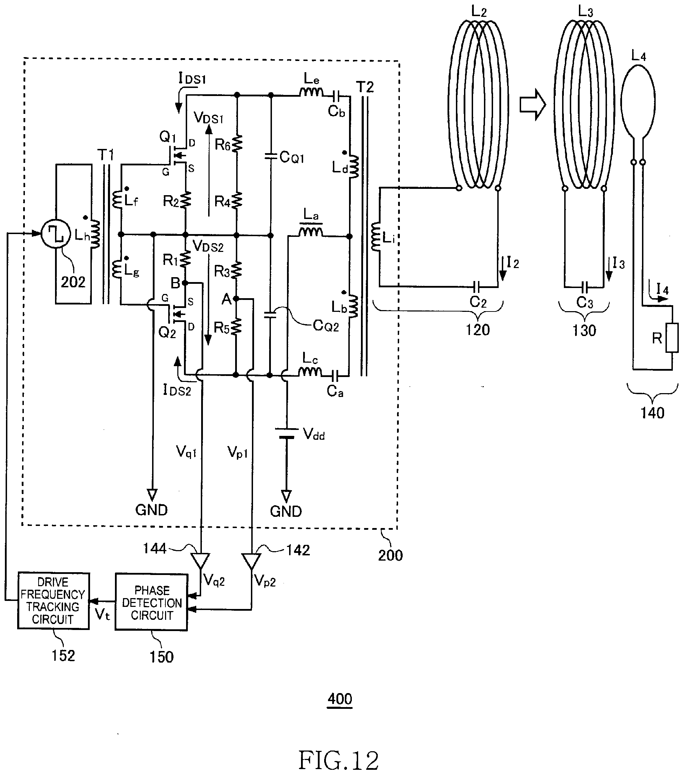

The above features and advantages of the present invention will be more apparent from the following description of certain preferred embodiments taken in conjunction with the accompanying drawings, in which the embodiments shown in figures 9 and 12 are not according to the invention and are present for illustration purposes only, and in which:
FIG. 1 is a basic system configuration view of a wireless power transmission system;
FIG. 2 is a view illustrating a current path formed when a first switching transistor is turned conductive;
FIG. 3 is a view illustrating a current path formed when a second switching transistor is turned conductive;
FIG. 4 is a time chart illustrating the voltage/current changing process in two switching transistors at the resonance time;
FIG. 5 is a graph illustrating a relationship between the impedance of a feeding coil circuit and drive frequency;
FIG. 6 is a graph illustrating a relationship between the output power efficiency and drive frequency;
FIG. 7 is a time chart illustrating the voltage/current changing process in the switching transistor observed in the case where the drive frequency is higher than resonance frequency;
FIG. 8 is a time chart illustrating the voltage/current changing process in the switching transistor observed in the case where the drive frequency is lower than resonance frequency;
FIG. 9 is a system configuration view of a wireless power transmission system according to the first embodiment;
FIG. 10 is a time chart illustrating the changing process of various voltages input to the phase detection circuit;
FIG. 11 is a graph illustrating a relationship between control voltage and drive frequency;
FIG. 12 is a system configuration view of the wireless power transmission system which is a modification of the first embodiment;
FIG. 13 is a system configuration view of a wireless power transmission system according to a second embodiment; FIG. 14 is an enlarged configuration view of a detection coil and a feeding coil;
FIG. 15 is an equivalent circuit diagram of a coupling transformer constituted by a detection coil and a feeding coil;
FIG. 16 is a graph illustrating a relationship between the impedance Z of a resonance circuit and drive frequency;
FIG. 17 is a graph illustrating a relationship between the output power efficiency and drive frequency;
FIG. 18 is a time chart illustrating the voltage/current changing process observed in the case where the drive frequency and resonance frequency coincide with each other;
FIG. 19 is a time chart illustrating the voltage/current changing process observed in the case where the drive frequency is higher than the resonance frequency;
FIG. 20 is a time chart illustrating the voltage/current changing process observed in the case where the drive frequency is lower than the resonance frequency;
FIG. 21 is a time chart illustrating the changing process of various voltages input to the phase detection circuit;
FIG. 22 is a graph illustrating a relationship between control voltage and drive frequency;
FIG. 23 is a system configuration view of the wireless power transmission system according to a first modification of the second embodiment;
FIG. 24 is a system configuration view of the wireless power transmission system according to a second modification of the second embodiment;
FIG. 25 is a system configuration view of the wireless power transmission system according to a third modification of the second embodiment;
FIG. 26 is a system configuration view of a wireless power transmission system according to a third embodiment;
FIG. 27 is a system configuration view of a wireless power transmission system according to a fourth embodiment;
FIG. 28 is a system configuration view of the wireless power transmission system according to a first modification of the fourth embodiment; and
FIG. 29 is a system configuration view of the wireless power transmission system according to a second modification of the fourth embodiment.

### DETAILED DESCRIPTION OF THE EMBODIMENTS

Preferred embodiments of the present invention will be explained below in detail with reference to the accompanying drawings. A wireless transmission system 300 in the present embodiment has not only a wireless power feeding function but also an automatic drive frequency tracking function.

### [First Embodiment: Push-pull Type]

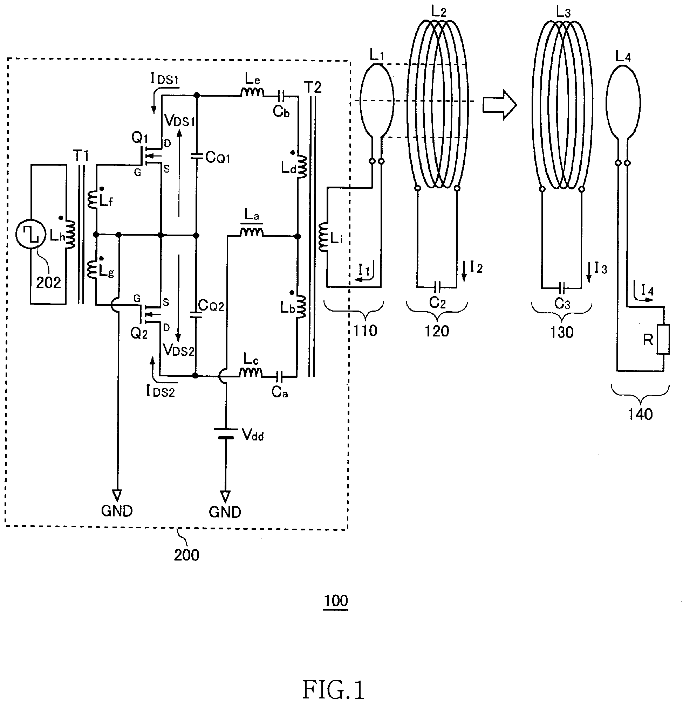

FIG. 1 is a system configuration view of a wireless power transmission system 100 without automatic drive frequency tracking function. The wireless power transmission system 100 includes a power circuit 200, an exciting circuit 110, a feeding coil circuit 120, a receiving coil circuit 130, and a loading circuit 140. A distance of several meters is provided between the feeding coil circuit 120 and receiving coil circuit 130. The wireless power transmission system 100 mainly aims to feed power from the feeding coil circuit 120 to receiving coil circuit 130 by wireless.

The wireless power transmission system 100 illustrated in FIG. 1 is assumed to operate at ISM (Industry-Science-Medical) frequency band. The following description will be made assuming that the resonance frequency fr of the feeding coil circuit 120 or receiving coil circuit 130 is 13.56 MHz within the ISM frequency band.

The exciting circuit 110 is a circuit in which an exciting coil L1 and a transformer T2 secondary coil Li are connected in series . The exciting circuit 110 receives AC power from the power circuit 200 through the transformer T2 secondary coil Li. The transformer T2 secondary coil Li constitutes a coupling transformer T2 together with a transformer T2 primary coil Ld and a transformer T2 primary coil Lb and receives AC power by electromagnetic induction. The number of windings of the exciting coil L1 is 1, diameter of the wire of the exciting coil L1 is 3 mm, and diameter of the exciting coil L1 itself is 210 mm. Current I1 flowing in the exciting circuit 110 is AC. The direction of an arrow in the diagram of the exciting circuit 110 indicates the positive direction, and direction opposite to the direction of the arrow indicates the negative direction.

The feeding coil circuit 120 is a circuit in which a feeding coil L2 and a capacitor C2 are connected in series. The exciting coil L1 and feeding coil L2 face each other. The distance between the exciting coil L1 and feeding coil L2 is as comparatively small as 10 mm or less. Thus, the exciting coil L1 and feeding coil L2 are electromagnetically strongly coupled to each other. The number of windings of the feeding coil L2 is 7, diameter of the wire of the feeding coil L2 is 5 mm, and diameter of the feeding coil L2 itself is 280 mm. When the current I1 is made to flow in the exciting coil L1, an electromotive force occurs in the feeding coil circuit 120 to cause current I2 to flow in the feeding coil circuit 120. The direction of an arrow in the diagram of the feeding coil circuit 120 indicates the positive direction, and direction opposite to the direction of the arrow indicates the negative direction. The flowing directions of the current I1 and current I2 are opposite (having opposite phases). The magnitude of the current I2 is significantly larger than that of the current 11. The values of the feeding coil L2 and capacitor C2 are set such that the resonance frequency fr of the feeding coil circuit 120 is 13.56 MHz.

The receiving coil circuit 130 is a circuit in which a receiving coil L3 and a capacitor C3 are connected in series. The feeding coil L2 and receiving coil L3 face each other. The distance between the feeding coil L2 and receiving coil L3 is as comparatively large as about 0.2 m to 1 m. The number of windings of the receiving coil L3 is 7, diameter of the wire of the receiving coil L3 is 5 mm, and diameter of the receiving coil L3 itself is 280 mm. The values of the receiving coil L3 and capacitor C3 are set such that the resonance frequency fr of the receiving coil circuit 130 is also 13.56 MHz. The feeding coil L2 and receiving coil L3 need not have the same shape. When the feeding coil circuit 120 generates a magnetic field at the resonance frequency fr, the feeding coil circuit 120 and receiving coil circuit 130 magnetically resonate, causing large current I3 to flow in the receiving coil circuit 130. The direction of an arrow in the diagram of the receiving coil circuit 130 indicates the positive direction, and direction opposite to the direction of the arrow indicates the negative direction. The flowing directions of the current I2 and current I3 are opposite (having opposite phases). That is, the current I1 and current I3 are in-phase.

The loading circuit 140 is a circuit in which a loading coil L4 and a load R are connected in series. The receiving coil L3 and loading coil L4 face each other. The distance between the receiving coil L3 and loading coil L4 is as comparatively small as about 10 mm or less. Thus, the receiving coil L3 and loading coil L4 are electromagnetically strongly coupled to each other. In the present embodiment, the number of windings of the loading coil L4 is 1, diameter of the wire of the loading coil L4 is 3 mm, and diameter of the loading coil L4 itself is 210 mm. When the current I3 is made to flow in the receiving coil L3, an electromotive force occurs in the loading circuit 140 to cause current I4 to flow in the loading circuit 140. The direction of an arrow in the diagram of the loading circuit 140 indicates the positive direction, and direction opposite to the direction of the arrow indicates the negative direction. The flowing directions of the current I3 and current I4 are opposite (having opposite phases). That is, the current I2 and current I4 are in-phase.

The AC power fed from the power circuit 200 is transmitted by the exciting circuit 110 and feeding coil circuit 120, received by the receiving coil circuit 130 and loading circuit 140, and taken from the load R. The frequencies of the currents I1 to I4 flowing in the exciting circuit 110, feeding coil circuit 120, receiving coil circuit 130, and loading circuit 140 are the same.

If the load R is connected in series to the receiving coil circuit 130, the Q-value of the receiving coil circuit 130 is degraded. Therefore, the receiving coil circuit 130 for power reception and loading circuit 140 for power extraction are separated from each other. In order to enhance the power transmission efficiency, the center lines of the exciting coil L1, feeding coil L2, receiving coil L3, and loading coil L4 are preferably made to coincide with one another.

The power circuit 200 is a push-pull circuit operating at a drive frequency fo and has a vertically symmetrical configuration as illustrated in FIG. 1. The exciting circuit 110 receives AC power at the drive frequency fo from the power circuit 200. In this case, the currents I1 to I4 at the drive frequency fo flow in the exciting circuit 110, feeding coil circuit 120, receiving coil circuit 130, and loading circuit 140. When the drive frequency fo and resonance frequency fr coincide with each other, that is, when the drive frequency fo assumes 13.56 MHz, the feeding coil circuit 120 and receiving coil circuit 130 magnetically resonate, maximizing the power transmission efficiency.

An oscillator 202 is connected to the primary side of a gate-drive transformer T1 included in the power circuit 200. The oscillator 202 generates AC voltage at the drive frequency fo. Although the voltage waveform may be a sine wave, it is assumed here that the voltage waveform is a rectangular wave. The AC voltage causes current to flow in a transformer T1 primary coil Lh alternately in both positive and negative directions. The transformer T1 primary coil Lh, transformer T1 secondary coil Lg, and transformer T1 secondary coil Lf constitute a gate-drive coupling transformer T1. Electromagnetic induction causes current to flow also in the transformer T1 secondary coil Lg and transformer T1 secondary coil Lf alternately in both positive and negative directions.

The secondary coil of the transformer T1 is center-point grounded. That is, one ends of the transformer T1 secondary coil Lf and transformer T1 secondary coil Lg are connected to each other and directly grounded. The other end of the transformer T1 secondary coil Lf is connected to the gate of a switching transistor Q1, and the other end of the transformer T1 secondary coil Lg is connected to the gate of a switching transistor Q2. The source of the switching transistor Q1 and source of the switching transistor Q2 are also grounded. Thus, when the oscillator 202 generates AC voltage of the drive frequency fo, voltage Vx (Vx>0) of the drive frequency fo is applied alternately to the gates of the switching transistors Q1 and Q2. As a result, the switching transistors Q1 and Q2 are alternately turned on/off at the drive frequency fo.

The switching transistors Q1 and Q2 are enhancement type MOSFET (Metal Oxide Semiconductor Field effect transistor) having the same characteristics but may be other transistors such as a bipolar transistor. Further, in the case where the drive frequency fo is lowered, other switches such as a relay switch may be used in place of the transistor.

Voltage between the source and drain of the switching transistor Q1 is referred to as source-drain voltage VDS1, and voltage between the source and drain of the switching transistor Q2 is referred to as source-drain voltage VDS2. Current flowing between the source and drain of the switching transistor Q1 is referred to as source-drain current IDS1, and current flowing between the source and drain of the switching transistor Q2 is referred to as source-drain current IDS2. The directions of arrows in the diagram of the power circuit 200 indicate the positive directions, and directions opposite to the directions of the arrows indicate the negative directions.

The drain of the switching transistor Q1 is connected in series to a transformer T2 primary coil Ld through an inductor Le and a capacitor Cb. Similarly, the drain of the switching transistor Q2 is connected in series to a transformer T2 primary coil Lb through an inductor Lc and a capacitor Ca. A smoothing inductor La and a power supply Vdd are connected to the connection point between the transformer T2 primary coil Ld and transformer T2 primary coil Lc. Further, a capacitor CQ1 is connected in parallel to the source-drain of the switching transistor Q1, and a capacitor CQ2 is connected in parallel to the source-drain of the switching transistor Q2. The inductors Le and Lc are coils having the same characteristics. The capacitors Cb and Ca are capacitors having the same characteristics, and capacitors CQ1 and CQ2 are capacitors having the same characteristics.

The inductor Le and capacitor Cb are inserted so as to shape the current waveform of the source-drain current IDS1, and inductor Lc and capacitor Ca are inserted so as to shape the current waveform of the source-drain current IDS2. Further, the capacitor CQ1 is inserted so as to shape the voltage waveform of the source-drain voltage VDS1, and capacitor CQ2 is inserted so as to shape the voltage waveform of the source-drain voltage VDS2. Even if the inductors Lc and Le, capacitors Ca, Cb, CQ1, and CQ2 are omitted, the wireless power feeding using the power circuit 200 can be achieved. In particular, in the case where the drive frequency fo is low, it is easily possible to maintain the power transmission efficiency even if the inductors and capacitors are omitted.

The input impedance of the exciting circuit 110 is 50 (Ω) . The number of windings of the transformer T2 primary coil Lb and the number of windings of the transformer T2 primary coil Ld are set such that the output impedance of the power circuit 200 is equal to the input impedance of 50 (Ω). When the output impedance of the power circuit 200 and input impedance of the exciting circuit 110 coincide with each other, the power circuit 200 has the maximum output.

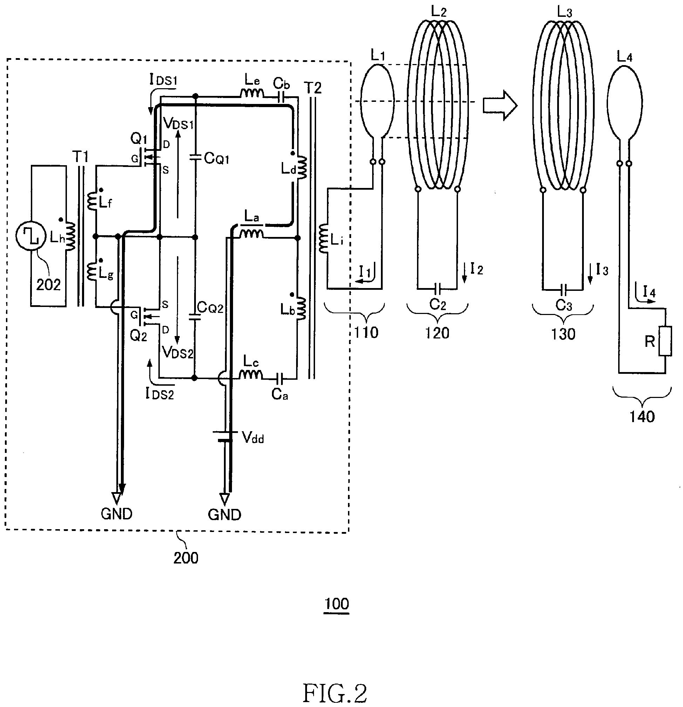

FIG. 2 is a view illustrating a current path formed when the switching transistor Q1 is turned conductive. When the switching transistor Q1 is turned conductive (ON), the switching transistor Q2 is turned non-conductive (OFF). A main current path (hereinafter, referred to as "first current path") at this time is from the power supply Vdd through the smoothing inductor La, transformer T2 primary coil Ld, capacitor Cb, inductor Le, and switching transistor Q1 to the ground. The switching transistor Q1 functions as a switch for controlling conduction/non-conduction of the first current path.

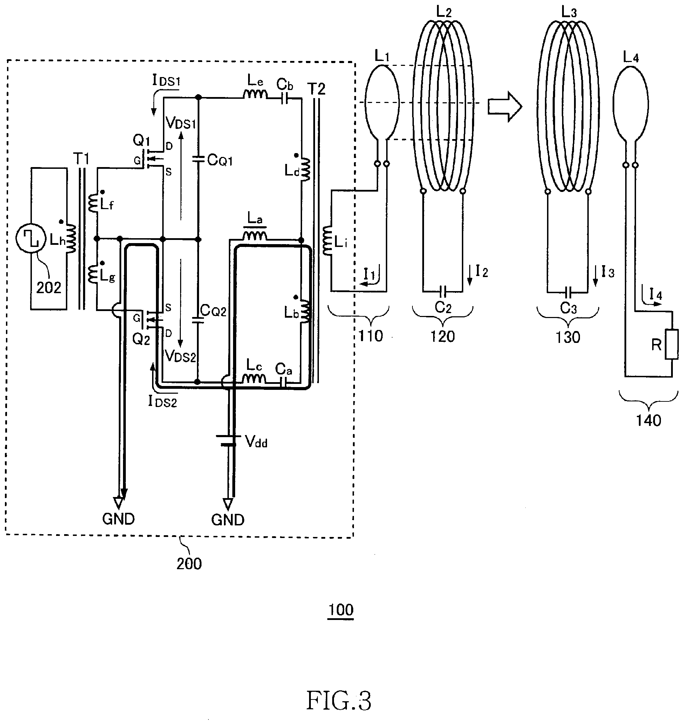

FIG. 3 is a view illustrating a current path formed when the switching transistor Q2 is turned conductive. When the switching transistor Q2 is turned conductive (ON), the switching transistor Q1 is turned non-conductive (OFF). A main current path (hereinafter, referred to as "second current path") at this time is from the power supply Vdd through the smoothing inductor La, transformer T2 primary coil Lb, capacitor Ca, inductor Lc, and switching transistor Q2 to the ground. The switching transistor Q2 functions as a switch for controlling conduction/non-conduction of the second current path.

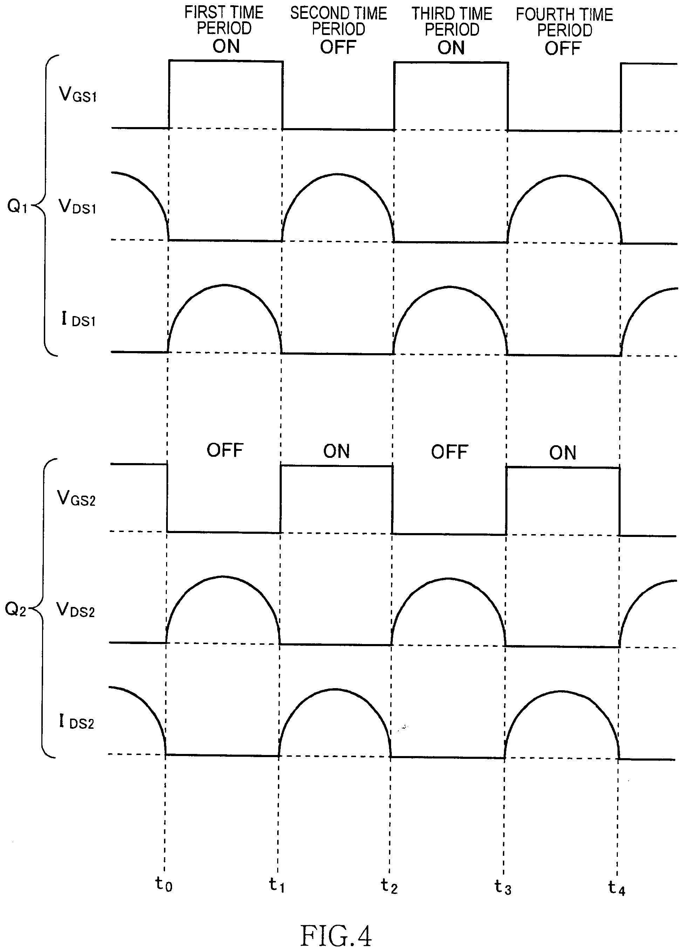

FIG. 4 is a time chart illustrating the voltage/current changing process in the switching transistors Q1 and Q2. Time period from time t0 to time t1 (hereinafter, referred to as "first time period") is a time period during which the switching transistor Q1 is ON while the switching transistor Q2 is OFF. Time period from time t1 to time t2 (hereinafter, referred to as "second time period") is a time period during which the switching transistor Q1 is OFF while the switching transistor Q2 is ON. Time period from time t2 to time t3 (hereinafter, referred to as "third time period") is a time period during which the switching transistor Q1 is ON while the switching transistor Q2 is OFF. Time period from time t3 to time t4 (hereinafter, referred to as "fourth time period" ) is a time period during which the switching transistor Q1 is OFF while the switching transistor Q2 is ON. FIG. 4 illustrates waveforms observed in the case where the drive frequency fo and resonance frequency fr coincide with each other and the feeding coil circuit 120 and receiving coil circuit 130 are in a resonance state.

When the gate-source voltage VGS1 of the switching transistor Q1 exceeds a predetermined threshold, the switching transistor Q1 is in a saturated state. Thus, when the switching transistor Q1 is turned ON (conductive) at time t0 which is the start timing of the first time period, the source-drain current IDS1 starts flowing in the first current path illustrated in FIG. 2. Since current resonance occurs in the inductor Le and capacitor Cb inserted into the first current path, the current waveform of the source-drain current IDS1 in the first time period does not assume a rectangular wave but the rising and falling edges become slower.

When the switching transistor Q1 is turned OFF (non-conductive) at time t1 which is the start timing of the second time period, the source-drain current IDS1 does not flow. Since the capacitor CQ1 is connected in parallel between the source and drain of the switching transistor Q1, the voltage waveform of the source-drain voltage VDS1 in the second time period does not assume a rectangular wave but the rising and falling edges become slower.

Since the switching transistor Q2 is OFF in the first time period, changes of the VGS2, IDS2, and VDS2 in the first time period are the same as those of the VGS1, IDS1, and VDS1 in the second time period. Since the switching transistor Q2 is ON in the second time period, changes of the VGS2, IDS2, and VDS2 in the second time period are the same as those of the VGS1, IDS1, and VDS1 in the first period. In the third, fourth, and subsequent time periods, the same waveforms as in the first and second time periods are repeated.

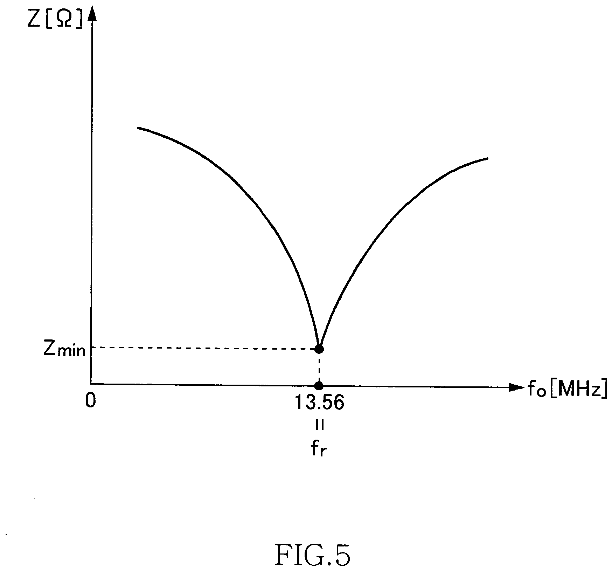

FIG. 5 is a graph illustrating a relationship between the impedance Z of the feeding coil circuit 120 and drive frequency fo. The vertical axis represents the impedance Z of the feeding coil circuit 120. The horizontal axis represents the drive frequency fo. The feeding coil circuit 120 is an LC circuit, so that the impedance Z of the feeding coil circuit 120 in view of the power circuit 200 or exciting circuit 110 is a minimum value Zmin at the resonance state. Although Zmin = 0 at the resonance state is ideal, Zmin does not become zero in general since some resistance components are included in the feeding coil circuit 120.

In FIG. 5, when the drive frequency fo is 13.56 MHz, that is, when the drive frequency fo and resonance frequency fr coincide with each other, the impedance Z becomes minimum and the feeding coil circuit 120 is in a resonance state. In a resonance state, the capacitive reactance and inductive reactance of the feeding coil circuit 120 cancel each other. When the drive frequency fo and resonance frequency fr deviate from each other, one of the capacitive reactance and inductive reactance prevails the other, so that the impedance Z is also increased.

To summarize, when the drive frequency fo of the power circuit 200 coincides with the resonance frequency fr, the AC current I1 flows in the exciting circuit 110 at the resonance frequency fr. As a result, the current I2 flows in the feeding coil circuit 120 at the resonance frequency fr, and the current I3 flows in the receiving coil circuit 130 at the resonance frequency fr. The feeding coil L2 and capacitor C2 of the feeding coil circuit 120 and the receiving coil L3 and capacitor C3 of the receiving coil circuit 130 resonate at the same resonance frequency fr, so that the power transmission efficiency from the feeding coil L2 to receiving coil L3 becomes maximum.

When the drive frequency fo of the power circuit 200 and resonance frequency fr deviate from each other, the AC current I1 flows in the exciting circuit 110 at a non-resonance frequency. Thus, the feeding coil circuit 120 or receiving coil circuit 130 is not in a resonance state, the power transmission efficiency is rapidly degraded.

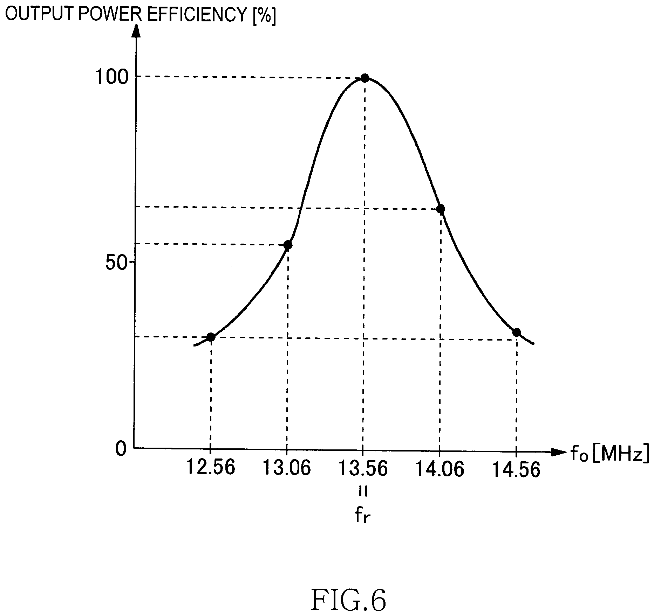

FIG. 6 is a graph illustrating a relationship between the output power efficiency and drive frequency fo. The output power efficiency is a ratio of power actually fed from the feeding coil circuit 120 relative to the maximum output value. When the drive frequency fo coincides with the resonance frequency fr, a difference between the current phase and voltage phase becomes zero and therefore the power transmission efficiency becomes maximum, with the result that output power efficiency of 100 (%) can be obtained. The output power efficiency can be measured from the magnitude of power taken from the load R.

As can be seen from the graph of FIG. 6, when the drive frequency fo is set to 14.06 MHz under the condition that the resonance frequency fr is 13.56 MHz, the output power efficiency is reduced to about 65 (%). That is, the drive frequency fo and resonance frequency fr deviate from each other by 0.5 MHz, the power transmission efficiency is reduced by 35 (%).

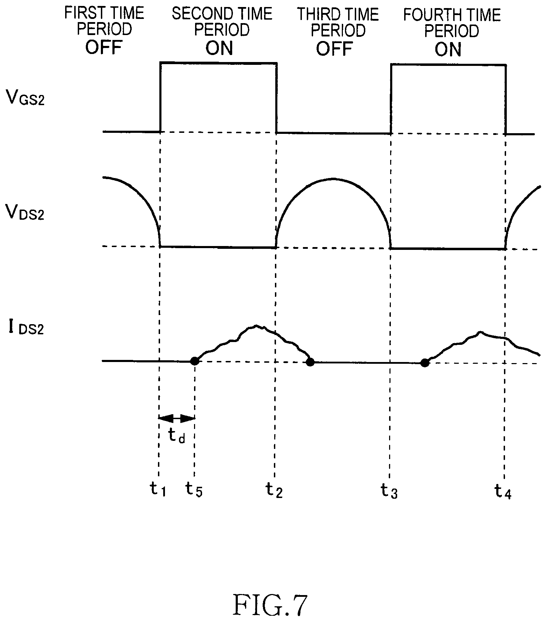

FIG. 7 is a time chart illustrating the voltage/current changing process in the switching transistor Q2 observed in the case where the drive frequency fo is higher than the resonance frequency fr. In the case where the drive frequency fo is higher than the resonance frequency fr, an inductive reactance component appears in the impedance Z of the feeding coil circuit 120, and the current phase of the current I2 of the feeding coil circuit 120 delays with respect to the voltage phase. As described above, the current I2 of the feeding coil circuit 120 and current I1 of the exciting circuit 110 have just opposite phases. Further, the current I1 of the exciting circuit 110 and source-drain current IDS2 of the switching transistor Q2 flowing in the second current path have just opposite phases. Thus, by measuring the current waveform of the source-drain current IDS2 passing through the switching transistor Q2, the phase of the current I2 of the feeding coil circuit 120 can be detected. Then, by comparing the current waveform of the source-drain current IDS2 and voltage waveform of the source-drain voltage VDS2, a phase difference td between the current phase and voltage phase in the supply power can be detected.

As illustrated in FIG. 4, when the drive frequency fo coincides with the resonance frequency fr, the source-drain current IDS2 starts flowing at time t1 which is the start timing of the second time period. In this case, the phase difference td is 0. When the drive frequency fo is higher than the resonance frequency fr, the source drain current IDS2 starts flowing at time t5 which is later than time t1, so that the phase difference td (= t1-t5) becomes less than 0. When the drive frequency fo and resonance frequency fr deviate from each other, the output power efficiency is degraded, and the source-drain current IDS2 itself becomes reduced.

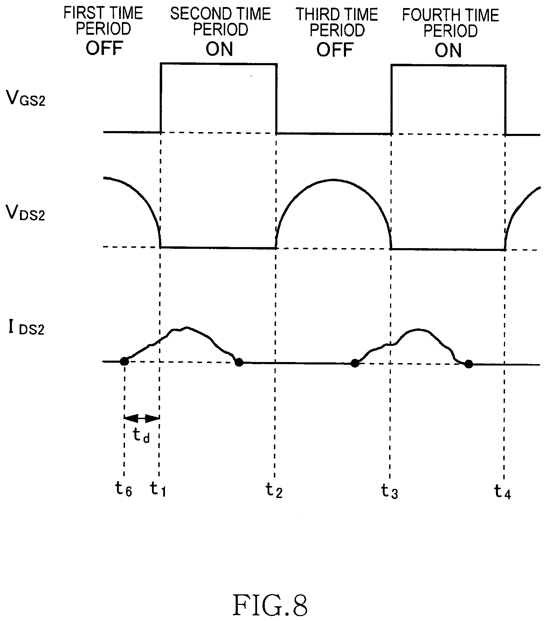

FIG. 8 is a time chart illustrating the voltage/current changing process in the switching transistor Q2 observed in the case where the drive frequency fo is lower than the resonance frequency fr. In the case where the drive frequency fo is lower than the resonance frequency fr, a capacitive reactance component appears in the impedance Z, and the current phase of the current I2 of the feeding coil circuit 120 advances with respect to the voltage phase. Thus, the source drain current IDS2 starts flowing at time t6 which is earlier than time t1. In this case, the phase difference td (= t1-t6) is more than 0. The amplitude itself of the source-drain current IDS2 becomes smaller than that at the resonance time.

The magnitude of the phase difference td and that of the deviation between the drive frequency fo and resonance frequency fr are proportional. Thus, by detecting the phase difference td and appropriately adjusting the drive frequency fo so as to eliminate the deviation between the drive frequency fo and resonance frequency fr, the resonance state can be maintained even if the resonance frequency fr is changed.

FIG. 9 is a system configuration view of a wireless power transmission system 300 according to the first embodiment. The wireless power transmission system 300 of the first embodiment has an "automatic drive frequency fo tracking function" in addition to the "wireless power feeding function" of the wireless power transmission system 100. Components designated by the same reference numerals as those of FIG. 1 have the same or corresponding functions as those in FIG. 1. In addition to the components illustrated in FIG. 1, the wireless power transmission system 300 further includes a first waveform rectifier 142, a second waveform rectifier 144, a phase detection circuit 150, and a drive frequency tracking circuit 152. Further, resistors R1 to R6 are added to a part of the power circuit 200.

The wireless power transmission system 100 of FIG. 1 as a basic configuration is assumed to operate at a predetermined resonance frequency fr. Thus, the drive frequency fr of the power circuit 200 is uniquely determined by the resonance frequency fr defined by the design of the feeding coil circuit 120 and receiving coil circuit 130.

However, the resonance frequency fr slightly changes depending on use condition or use environment of the feeding coil circuit 120 or receiving coil circuit 130. Further, in the case where the feeding coil circuit 120 or receiving coil circuit 130 is replaced with new one, the resonance frequency fr changes. Alternatively, there may be case where the resonance frequency needs to be changed aggressively by setting the electrostatic capacitance of the capacitor C2 or capacitor C3 variable. Even in such a case, the wireless power transmission system 300 can make the drive frequency fo and resonance frequency fr to automatically coincide with each other.

In the wireless power transmission system 300, the resistor R2 is connected in series between the source of the switching transistor Q1 and ground, and resistor R1 is connected in series between the source of the switching transistor Q2 and ground. These resistors are referred to as "first resistors". Further, the resistors R4 and R6 are connected in parallel to the source-drain of the switching transistor Q1, and resistors R3 and R5 are connected in parallel to the source-drain of the switching transistor Q2. A combination of the resistors R4 and R6 or combination of the resistors R3 and R5 is referred to as "second resistor". The resistors R1, R3, and R5 are equal respectively to the resistors R2, R4, and R6 in the resistance value.

The phase difference td is measured based on potential Vp1 (intermediate potential of the second resistor) of a connection point A between the resistors R3 and R5 and potential Vq1 (voltage value applied to the first resistors) of a connection point B between the source of the switching transistor Q2 and resistor R1. As described with reference to FIGS. 7 and 8, the voltage phase can be measured from the analog waveform of the source-drain voltage VDS2. In the wireless power transmission system 300, the source-drain voltage VDS2 is divided by the resistors R3 and R5, and the potential Vp1 is taken as the intermediate potential of the source-drain voltage VDS2. Even in the case where the source-drain voltage VDS2 is increased, the voltage VDS2 can be reduced to a manageable level by the voltage division. In the case where the source-drain voltage VDS2 can be handled without modification, the voltage division need not be performed.

The voltage phase can be measured from elements other than the source-drain voltage VDS2. For example, the source-gate voltage VGS2 or voltages of the both ends of the transformer T1 primary coil may be set as a measurement target.

The current phase can be measured from the analog waveform of the source-drain current IDS2. The potential Vq1 of the connection point B has the same phase as that of the source-drain current IDS2, so that the current phase can be measured from the analog waveform of the potential Vq1. By comparing the analog waveforms of the potential Vp1 and potential Vq1, the phase difference td between the voltage phase and current phase can be identified.

Although the current phase and voltage phase are measured from the switching transistor Q2 side in the wireless power transmission system 300, the same results can be obtained by performing the measurement from the switching transistor Q1 side. Further, although the resistors R2, R4, and R6 are connected on the switching transistor Q1 which is not set as a measurement target in order to make the circuit configuration of the power circuit 200 vertically symmetrical, these resistors may be omitted.

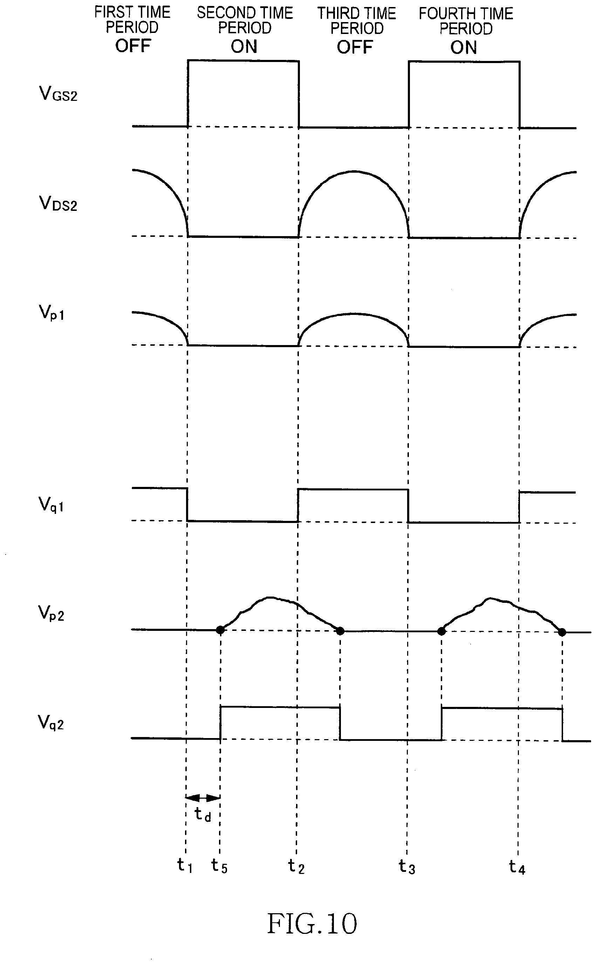

The potential Vp1 and potential Vq1 are digitized by the first waveform rectifier 142 and second waveform rectifier 144, respectively. Although details will be described later with reference to FIG. 10, the first waveform rectifier 142 is an amplifier that outputs a saturated voltage Vp2 = 5 (V) when the potential Vp1 exceeds a predetermined threshold, e.g., 0.1 (V) . Thus, the potential Vp1 of an analog waveform is converted to the voltage Vp2 of a digital waveform by the first waveform rectifier 142. Similarly, the second waveform rectifier 144 is an amplifier that outputs a saturated voltage Vq2 = 5 (V) when the voltage Vp2 exceeds a predetermined threshold. The potential Vq1 of an analog waveform is converted to the voltage Vq2 of a digital waveform by the second waveform rectifier 144.

The phase detection circuit 150 compares the digital waveforms of the voltage Vp2 and voltage Vq2 to calculate the phase difference td. The phase detection circuit 150 changes a control voltage Vt in accordance with the phase difference td. The drive frequency tracking circuit 152 adjusts the drive frequency fo of the oscillator 202 in accordance with the control voltage Vt.

The drive frequency tracking circuit 152 and oscillator 202 may be integrated as a VCO (Voltage Controlled Oscillator). Further, an amplifier may be provided at the rear stage of the VCO so as to amplify the voltage to be fed to the transformer T1 primary coil Lh.

FIG. 10 is a time chart illustrating the changing process of various voltages input to the phase detection circuit 150. The source-drain voltage VDS2 changes in synchronization with ON/OFF of the switching transistor Q2. By dividing the source-drain voltage VDS2 by the resistors R3 and R5, the potential Vp1 is detected at the connection point A. The potential Vp1 has the same phase as that of the source-drain voltage VDS2 and has a waveform in which the amplitude (peak voltage) is reduced. In the first and third time periods during which the switching transistor Q2 is OFF, the source-drain voltage VDS2 is more than 0, that is, the potential Vp1 is more than 0. The first waveform rectifier 142 amplifies the potential Vp1 of an analog waveform to thereby generate the potential Vq1 of a digital waveform.

The potential Vq1 of the connection point B changes in synchronization with the source-drain current IDS2. FIG. 10 illustrates a state where the drive frequency fo is higher than the resonance frequency fr and the current phase delays with respect to the voltage phase. The second waveform rectifier 144 amplifies the potential Vq1 of an analog waveform to thereby generate the voltage Vq2 of a digital waveform.

The phase detection circuit 150 compares falling edge time t1 of the voltage Vp2 and rising edge time t5 of the voltage Vq2 and calculates the phase difference td by subtracting t5 from t1. The conversion of the analog waveforms of the potentials Vp1 and Vq1 into digital waveforms using the first waveform rectifier 142 and second waveform rectifier 144 makes it easier for the phase detection circuit 150 to detect the phase difference td. As a matter of course, the phase detection circuit 150 may detect the phase difference td by directly comparing the potential Vp1 and potential Vq1.

If the current I2 flowing in the feeding coil L2 is set as a measurement target as in the Patent Document 2, a new load is applied to the feeding coil circuit 120 to change the impedance Z of the feeding coil circuit 120, resulting in degradation of the Q-value. Connecting the phase detection circuit 150 to the current path of the resonating feeding coil L2 is like measuring the vibration of a tuning fork while touching the tuning fork. In the wireless power transmission system 300 according to the first embodiment, the current phase is measured based on the potential Vq1 in the power circuit 200. The measurement load is not applied to the four resonance circuits (exciting circuit 110, feeding coil circuit 120, receiving coil circuit 130, and loading circuit 140), so that it is possible to measure the current phase while suppressing the influence on the Q-value.

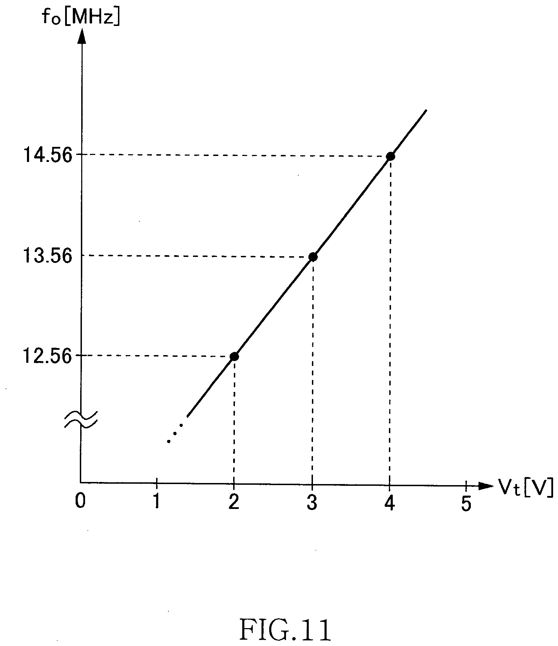

FIG. 11 is a graph illustrating a relationship between the control voltage Vt and drive frequency fo. The relationship of FIG. 11 is set in the drive frequency tracking circuit 152. The phase difference td is proportional to the variation of the resonance frequency fr. Thus, the phase detection circuit 150 determines the variation of the control voltage Vt in accordance with the phase difference td, and the drive frequency tracking circuit 152 determines the drive frequency fo in accordance with the control voltage Vt.

The resonance frequency fr is 13.56 MHz in the initial state and, accordingly, the drive frequency fo is set to 13.56 MHz. The control voltage Vt is initially set to 3 (V). Here, it is assumed that the resonance frequency fr is changed from 13.56 MHz to 12.56 MHz. Since the drive frequency fo (= 13.56 MHz) is higher than the resonance frequency fo (= 12.56 MHz) in this state, the phase difference td is smaller than 0. The phase difference td is proportional to the variation (-1.0 MHz) of the resonance frequency fr. The phase detection circuit 150 determines the variation of the control voltage Vt based on the phase difference td. In this example, the phase detection circuit 150 sets the variation of the control voltage Vt to -1 (V) and outputs new control voltage Vt = 2 (V). The drive frequency tracking circuit 152 outputs the drive frequency fo = 12.56 MHs corresponding to the control voltage Vt = 2 (V) according to the relationship represented by the graph of FIG. 11. With the above processing, it is possible to allow the drive frequency fo to automatically track a change of the resonance frequency fr.

The phase detection circuit 150, the drive frequency tracking circuit 152, and oscillator 202 may be implemented as one chip. The processing of the phase detection circuit 150 or drive frequency tracking circuit 152 may be performed by software. For example, setting information in which the phase difference td and variation of the drive frequency fo have been previously associated may be retained. In this case, the drive frequency fo is adjusted in accordance with the magnitude of the detected phase difference td.

FIG. 12 is a system configuration view of a wireless power transmission system 400 which is a modification of the wireless power transmission system of the first embodiment. In the wireless power transmission system 400, the power circuit 200 directly drives the feeding coil circuit 120 without intervention of the exciting circuit 110. Components designated by the same reference numerals as those of FIG. 1 or FIG. 9 have the same or corresponding functions as those in FIG. 1 or FIG. 9.

The feeding coil circuit 120 of the wireless power transmission system 400 is a circuit in which the transformer T2 secondary coil Li is connected in series to the feeding coil L2 and capacitor C2. The transformer T2 secondary coil Li constitutes the coupling transformer T2 together with the transformer T2 primary coil Lb and transformer T2 primary coil Ld and receives AC power from the power circuit 200 by electromagnetic induction. As described above, the AC power may be directly fed from the power circuit 200 to the feeding coil circuit 200 without intervention of the exciting circuit 110.

### [Second Embodiment: Half-bridge type]

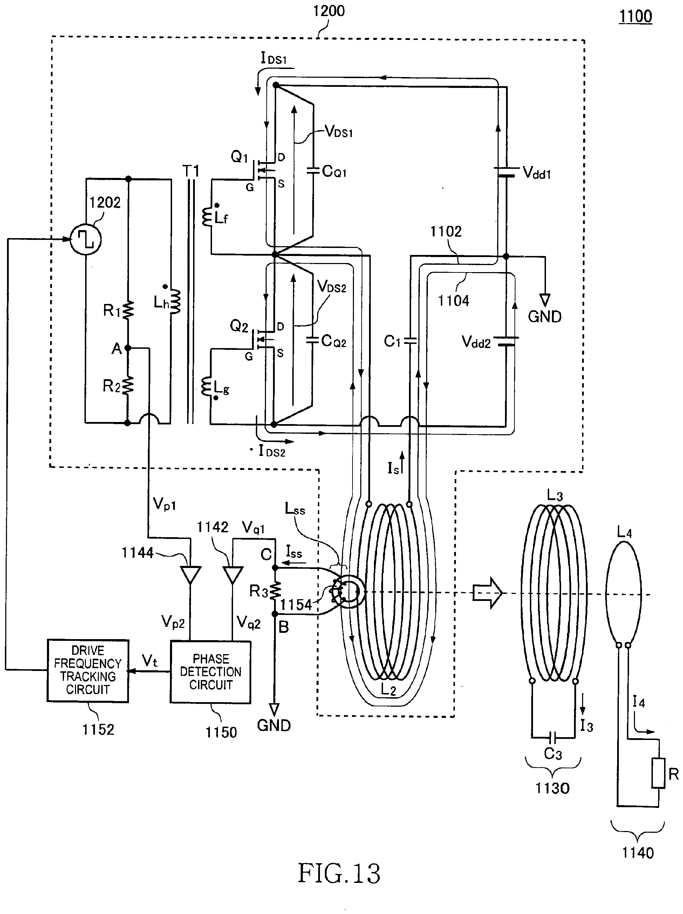

FIG. 13 is a system configuration view of a wireless power transmission system 1100 according to a second embodiment. The wireless power transmission system 1100 includes, as basic components, a power circuit 1200, a receiving coil circuit 1130, and a loading circuit 1140. Further, the wireless power transmission system 1100 includes, as components for automatically adjusting the drive frequency fo, a first waveform rectifier 1142, a second waveform rectifier 1144, a phase detection circuit 1150, and a drive frequency tracking circuit 1152. The power circuit 1200 further includes a feeding coil L2. A distance of several meters is provided between the feeding coil L2 and receiving coil circuit 1130. The wireless power transmission system 1100 mainly aims to feed power from the feeding coil L2 to receiving coil circuit 1130 by wireless. The wireless power transmission system 1100 according to the second embodiment is assumed to operate at around 100 kHz. Thus, the resonance frequency fr of the feeding coils L2 and L3 is set to 100 MHz. The wireless power transmission system according to the present embodiment can be made to operate at a high-frequency band such as an ISM (Industry-Science-Medical) frequency band.

The power circuit 1200 is a half-bridge type circuit that directly feeds AC power to the feeding coil L2 without intervention of the exciting coil. As illustrated in FIG. 13, the power circuit 1200 has a vertically symmetrical configuration. Current IS flowing in the feeding coil L2 is AC. The direction of an arrow in the diagram of the feeding coil L2 indicates the positive direction, and direction opposite to the direction of the arrow indicates the negative direction. In the present embodiment, the number of windings of the feeding coil L2 is 7, diameter of the wire of the feeding coil L2 is 5 mm, and diameter of the feeding coil L2 itself is 280 mm.

The receiving coil circuit 1130 is a circuit in which a receiving coil L3 and a capacitor C3 are connected in series. The feeding coil L2 and receiving coil L3 face each other. The distance between the feeding coil L2 and receiving coil L3 is as comparatively large as about 0.2 m to 1 m. The number of windings of the receiving coil L3 is 7, diameter of the wire of the receiving coil L3 is 5 mm, and diameter of the receiving coil L3 itself is 280 mm. The values of the receiving coil L3 and capacitor C3 are set such that the resonance frequency fr of the receiving coil circuit 1130 is also 100 kHz. The feeding coil L2 and receiving coil L3 need not have the same shape. When the feeding coil circuit 1120 generates a magnetic field at the resonance frequency fr, the feeding coil circuit 1120 and receiving coil circuit 1130 magnetically resonate, causing large current I3 to flow in the receiving coil circuit 1130. The direction of an arrow in the diagram of the receiving coil circuit 1130 indicates the positive direction, and direction opposite to the direction of the arrow indicates the negative direction. The flowing directions of the current I2 and current I3 are opposite (having opposite phases).

The loading circuit 1140 is a circuit in which a loading coil L4 and a load R are connected in series. The receiving coil L3 and loading coil L4 face each other. The distance between the receiving coil L3 and loading coil L4 is as comparatively small as about 10 mm or less. Thus, the receiving coil L3 and loading coil L4 are electromagnetically strongly coupled to each other. In the present embodiment, the number of windings of the loading coil L4 is 1, diameter of the wire of the loading coil L4 is 3 mm, and diameter of the loading coil L4 itself is 210 mm. When the current I3 is made to flow in the receiving coil L3, an electromotive force occurs in the loading circuit 1140 to cause current I4 to flow in the loading circuit 1140. The direction of an arrow in the diagram of the loading circuit 140 indicates the positive direction, and direction opposite to the direction of the arrow indicates the negative direction. The flowing directions of the current I3 and current I4 are opposite (having opposite phases) . The AC power transmitted from the feeding coil L2 of the power circuit 1200 is received by the receiving coil circuit 1130 and loading circuit 1140, and taken from the load R.

If the load R is connected in series to the receiving coil circuit 1130, the Q-value of the receiving coil circuit 1130 is degraded. Therefore, the receiving coil circuit 1130 for power reception and loading circuit 1140 for power extraction are separated from each other. In order to enhance the power transmission efficiency, the center lines of the exciting coil L1, feeding coil L2, receiving coil L3, and loading coil L4 are preferably made to coincide with one another.

A configuration of the power circuit 1200 will be described. An oscillator 1202 is connected to the primary side of the gate-drive transformer T1. The oscillator 1202 functions as a "power transmission control circuit" that generates AC voltage at the drive frequency fo. Although the voltage waveform may be a sine wave, it is assumed here that the voltage waveform is a rectangular wave. The AC voltage causes current to flow in the transformer T1 primary coil Lh alternately in both positive and negative directions. The transformer T1 primary coil Lh, transformer T1 secondary coil Lg, and transformer T1 secondary coil Lf constitute a gate-drive coupling transformer T1. Electromagnetic induction causes current to flow also in the transformer T1 secondary coil Lg and transformer T1 secondary coil Lf alternately in both positive and negative directions.

One end of the transformer T1 secondary coil Lf is connected to the gate of the switching transistor Q1, and the other end thereof is connected to the source of the switching transistor Q1. One end of the transformer T1 secondary coil Lg is connected to the gate of the switching transistor Q2, and the other end thereof is connected to the source of the switching transistor Q2. When the oscillator 1202 generates AC voltage of the drive frequency fo, voltage Vx (Vx>0) of the drive frequency fo is applied alternately to the gates of the switching transistors Q1 and Q2. As a result, the switching transistors Q1 and Q2 are alternately turned on/off at the drive frequency fo. The switching transistors Q1 and Q2 are enhancement type MOSFET (Metal Oxide Semiconductor Field effect transistor) having the same characteristics but may be other transistors such as a bipolar transistor. Other switches such as a relay switch may be used in place of the transistor.

The drain of the switching transistor Q1 is connected to the positive terminal of a power supply Vdd1. The negative terminal of the power supply Vdd1 is connected to the source of the switching transistor Q1 through the capacitor C1 and feeding coil L2. The voltage at the negative terminal of the power supply Vdd1 is the ground voltage. The source of the switching transistor Q2 is connected to the negative terminal of a power supply Vdd2. The positive terminal of the power supply Vdd2 is connected to the drain of the switching transistor Q2 through the capacitor C1 and feeding coil L2. The voltage at the positive terminal of the power supply Vdd2 is the ground voltage.

Voltage between the source and drain of the switching transistor Q1 is referred to as source-drain voltage VDS1, and voltage between the source and drain of the switching transistor Q2 is referred to as source-drain voltage VDS2. Current flowing between the source and drain of the switching transistor Q1 is referred to as source-drain current IDS1, and current flowing between the source and drain of the switching transistor Q2 is referred to as source-drain current IDS2. The directions of arrows in the diagram of the power circuit 1200 indicate the positive directions, and directions opposite to the directions of the arrows indicate the negative directions.

The values of the capacitor C1 and feeding coil L2 are set so as to resonate at the resonance frequency fr. In other words, the capacitor C1 and feeding coil L2 constitute a "resonance circuit" of the resonance frequency fr. Further, the existence of the capacitor C1 and feeding coil L2 makes the current waveforms of the source-drain current IDS1 and source-drain current IDS2 to be sine waveforms.

The capacitor CQ1 is connected parallel to the source-drain of the switching transistor Q1, and capacitor CQ2 is connected in parallel to the source-drain of the switching transistor Q2. The capacitors CQ1 and CQ2 have the same characteristics. The capacitor CQ1 is inserted so as to shape the voltage waveform of the source-drain voltage VDS1, and capacitor CQ2 is inserted so as to shape the voltage waveform of the source-drain voltage VDS2. Even if capacitors CQ1 and CQ2 are omitted, the wireless power feeding using the power circuit 1200 can be achieved. In particular, in the case where the drive frequency fo is low, the influence of the capacitors is reduced.

When the switching transistor Q1 is turned conductive (ON) , the switching transistor Q2 is turned non-conductive (OFF). A main current path (hereinafter, referred to as "first current path 1102") at this time starts from the power supply Vdd1, passes through the switching transistor Q1, the feeding coil L2 and the capacitor C1 and returns to Vdd1. The switching transistor Q1 functions as a switch for controlling conduction/non-conduction of the first current path.

When the switching transistor Q2 is turned conductive (ON) , the switching transistor Q1 is turned non-conductive (OFF). A main current path (hereinafter, referred to as "second current path 1104") at this time starts from the power supply Vdd2, passed through the capacitor C1, the feeding coil L2, and switching transistor Q2 and return to Vdd2. The switching transistor Q2 functions as a switch for controlling conduction/non-conduction of the second current path.

When the oscillator 1202 feeds the AC voltage at the resonance frequency fr, a first current path 1102 and a second current path 1104 are alternately switched at the resonance frequency fr. Since the AC current of the resonance frequency fr flows in the capacitor C1 and feeding coil L2, the capacitor C1 and feeding coil L2 are in a resonance state. The receiving coil circuit 1130 is also a resonance circuit of the resonance frequency fr, so that the feeding coil L2 and receiving coil L3 magnetically resonate. At this time, the maximum transmission efficiency can be obtained.

The resonance frequency fr slightly changes depending on use condition or use environment of the feeding coil circuit 1120 or receiving coil circuit 1130. Further, in the case where the feeding coil circuit 120 or receiving coil circuit 130 is replaced with new one, the resonance frequency fr changes. Alternatively, there may be case where the resonance frequency needs to be changed aggressively by setting the electrostatic capacitance of the capacitor C2 or capacitor C3 variable. Even in such a case, the wireless power transmission system 1100 can make the drive frequency fo and resonance frequency fr to automatically coincide with each other.

In order to make the drive frequency fo to track the resonance frequency fr, the following configuration is added. Resistors R1 and R2 are connected to both ends of the oscillator 1202. A connection point A between the resistors R1 and R2 is connected to the phase detection circuit 1150 through the second waveform rectifier 1144. The phase detection circuit 1150 measures the voltage phase of the AC power fed by the power circuit 1200 based on the potential Vp1 of the connection point A according to the following method.

The AC voltage generated by the oscillator 1202 is divided by the resistors R1 and R2, and the potential Vp1 is taken as the intermediate potential of the AC voltage. Even in the case where the AC voltage generated by the oscillator 1202 is large, the AC voltage can be reduced to a manageable level by the voltage division. In the case where the AC voltage generated by the oscillator 1202 can be handled without modification, the voltage division need not be performed. The voltage phase may be measured from the source-drain voltages VDS1 and VDS2 or source-gate voltages VGS1 and VGS2.

A detection coil LSS is provided near the feeding coil L2. The detection coil LSS is a coil wounded around a core 1154 (toroidal core) having a penetration hole NS times. A part of the feeding coil L2 penetrates the core 1154, so that the feeding coil L2 and detection coil LSS constitute a coupling transformer. Inductive current ISS is made to flow in the detection coil LSS by an AC magnetic field generated by AC current IS. The current IS and inductive current ISS have the same phase.

A resistor R3 is connected to both ends of the detection coil LSS. One end B of the resistor R3 is grounded, and the other end C thereof is connected to the phase detection circuit 1150 through the first waveform rectifier 1142. The phase detection circuit 1150 measures the current phase of the AC power fed by the power circuit 1200based on the potential Vq1 of the connection point C according to the following method. The current IS and inductive current ISS have the same phase, and the inductive current ISS and potential Vq1 have the same phase. Therefore, the current phase of the current IS can be measured from the voltage phase of the potential Vq1. By comparing the voltage waveforms of the potential Vp1 and potential Vq1, the deviation between the voltage phase and current phase can be detected.

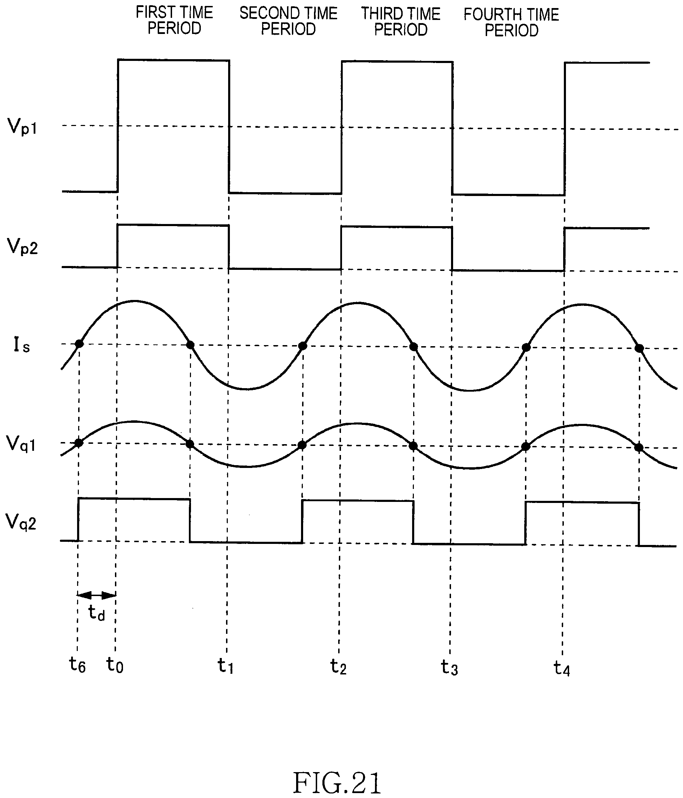

The potential Vp1 and potential Vq1 are digitized by the first waveform rectifier 1142 and second waveform rectifier 1144, respectively. Although details will be described later with reference to FIG. 21, the first waveform rectifier 1142 is an amplifier that outputs a saturated voltage Vp2 = 5 (V) when the potential Vp1 exceeds a predetermined threshold, e.g., 0.1 (V) . Thus, even in the case where the potential Vp1 assumes an analog waveform, the potential Vp1 is converted into voltage Vp2 of a digital waveform by the first waveform rectifier 1142. The first waveform rectifier 1142 functions particularly effectively when the oscillator 1202 generates the AC voltage not of a rectangular waveform but of an analog waveform such as a sine wave. The second waveform rectifier 1144 is an amplifier that outputs a saturated voltage Vq2 = 5 (V) when the voltage Vp2 exceeds a predetermined threshold. The potential Vq1 of an analog waveform is converted to the voltage Vq2 of a digital waveform by the second waveform rectifier 1144.

The phase detection circuit 1150 compares the digital waveforms of the voltage Vp2 and voltage Vq2 to calculate the phase difference td. The phase detection circuit 1150 changes a control voltage Vt in accordance with the phase difference td. The drive frequency tracking circuit 1152 adjusts the drive frequency fo of the oscillator 1202 in accordance with the control voltage Vt.

The drive frequency tracking circuit 1152 and oscillator 1202 may be integrated as a VCO (Voltage Controlled Oscillator) . Further, an amplifier may be provided at the rear stage of the VCO so as to amplify the voltage to be fed to the transformer T1 primary coil Lh.

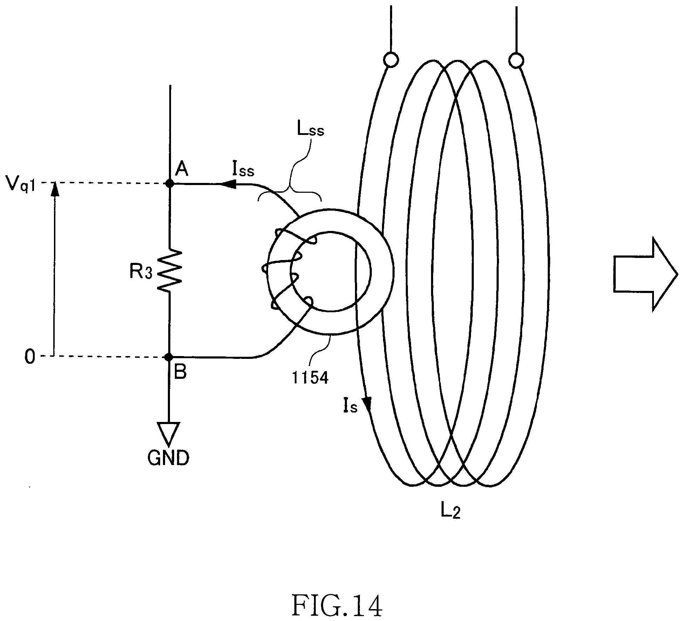

FIG. 14 is an enlarged configuration view of the detection coil LSS and feeding coil L2. FIG. 14 illustrates a configuration around the detection coil LSS in detail. The core 1154 has a cylindrical shape having a penetration hole and is formed of a known material such as ferrite, silicon steel, or permalloy. The number of windings NS of the detection coil LSS in the present embodiment is 100. A part of the feeding coil L2 penetrates the penetration hole of the core 1154. This means that the number of windings NP of the feeding coil L2 with respect to the core 1154 is one. With the above configuration, the detection coil LSS and feeding coil L2 constitute a coupling transformer.

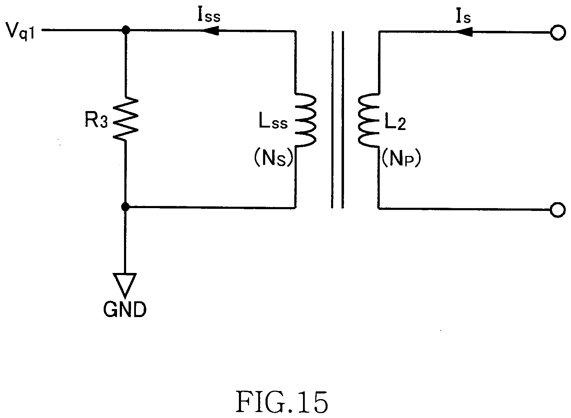

FIG. 15 is an equivalent circuit diagram of the coupling transformer constituted by the detection coil LSS and feeding coil L2. The feeding coil L2 is on the primary side, and the detection coil LSS is on the secondary side, whereby the coupling transformer is formed therebetween. An AC magnetic field generated by the AC current IS of the feeding coil L2 causes inductive current ISS having the same phase as that of the current IS to flow in the detection coil LSS. The magnitude of the inductive current ISS is represented by IS· (NP/NS) according to the law of equal ampere-turn. The potential Vq1 at one end C of the detection coil LSS is set as a measurement target. The other end B of the detection coil LSS is grounded, so that the potential Vq1 is equal to the voltage value applied to the resistor R3.

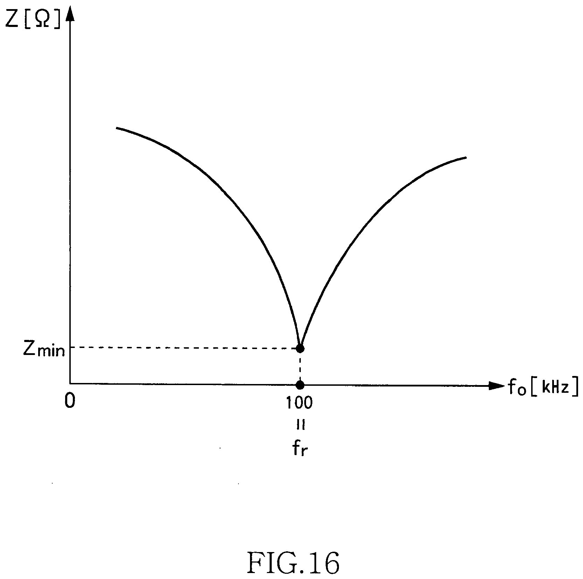

FIG. 16 is a graph illustrating a relationship between the impedance Z of the resonance circuit and drive frequency fo. The vertical axis represents the impedance Z of the resonance circuit part (series circuit of the capacitor C1 and feeding coil L2) in the power circuit 1200. The horizontal axis represents the drive frequency fo. The impedance Z of the resonance circuit is a minimum value Zmin at the resonance state. Although Zmin = 0 at the resonance state is ideal, Zmin does not become zero in general since some resistance components are included in the resonance circuit.

In FIG. 16, when the drive frequency fo is 100 kHz, that is, when the drive frequency fo and resonance frequency fr coincide with each other, the impedance Z becomes minimum and the capacitor C1 and the feeding coil L2 are in a resonance state. When the drive frequency fo and resonance frequency fr deviate from each other, one of the capacitive reactance and inductive reactance prevails the other, so that the impedance Z is also increased.

When the drive frequency fo of the power circuit 1200 coincides with the resonance frequency fr, the AC current IS flows in the feeding coil L2 at the resonance frequency fr, and current I3 flows in the receiving coil circuit 1130 at the resonance frequency fr. The combination of feeding coil L2 and capacitor C2, and the receiving coil L3 and capacitor C3 of the receiving coil circuit 130 resonate at the same resonance frequency fr, so that the power transmission efficiency from the feeding coil L2 to receiving coil L3 becomes maximum.

When the drive frequency fo and resonance frequency fr deviate from each other, the AC current IS flows in the feeding coil L2 at a non-resonance frequency. Thus, the feeding coil L2 and the receiving coil L3 are not in a resonance state, the power transmission efficiency is rapidly degraded.

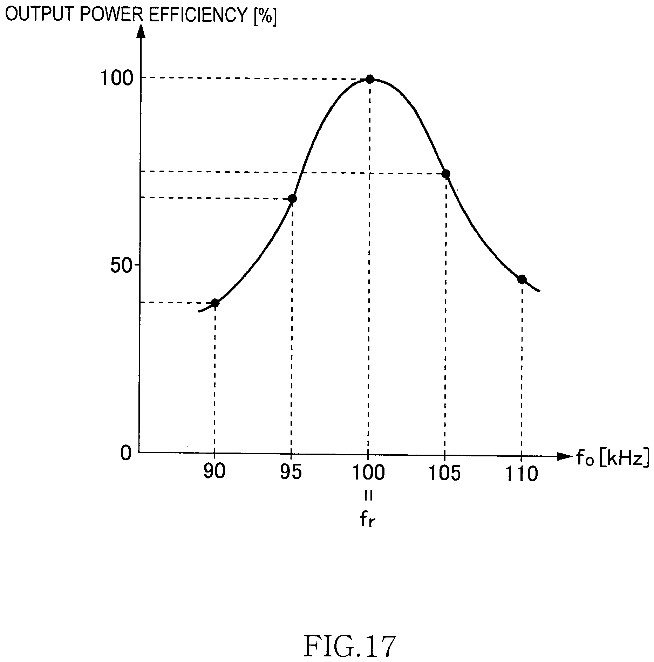

FIG. 17 is a graph illustrating a relationship between the output power efficiency and drive frequency fo. The output power efficiency is a ratio of power actually fed from the feeding coil L2 relative to the maximum output value. When the drive frequency fo coincides with the resonance frequency fr, a difference between the current phase and voltage phase becomes zero and therefore the power transmission efficiency becomes maximum, with the result that output power efficiency of 100 (%) can be obtained. The output power efficiency can be measured from the magnitude of power taken from the load R.

As can be seen from the graph of FIG. 17, when the drive frequency fo is set to 105 kHz under the condition that the resonance frequency fr is 100 kHz, the output power efficiency is reduced to about 75 (%). That is, the drive frequency fo and resonance frequency fr deviate from each other by 5 kHz, the power transmission efficiency is reduced by 25 (%).

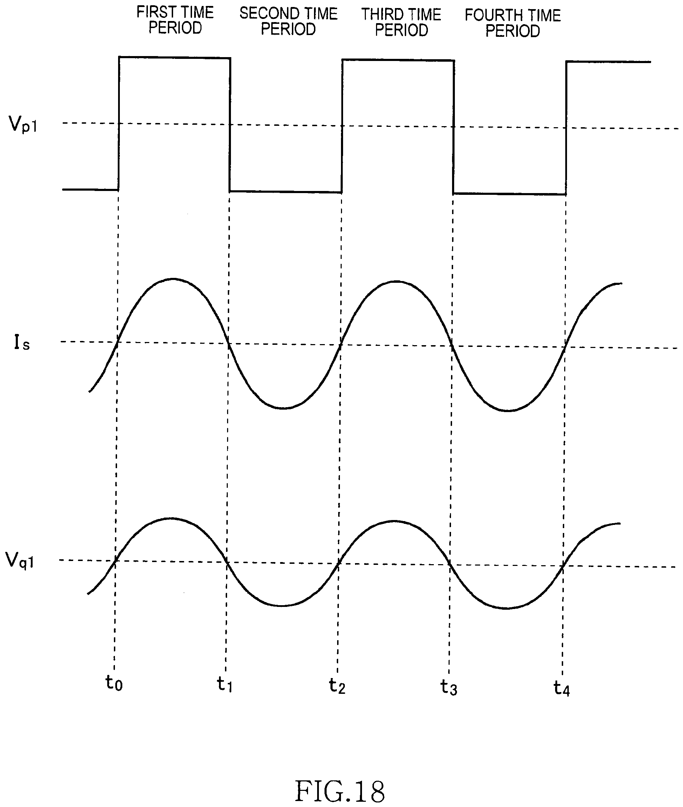

FIG. 18 is a time chart illustrating the voltage/current changing process observed in the case where the drive frequency fo and resonance frequency fr coincide with each other. Time period from time t0 to time t1 (hereinafter, referred to as "first time period") is a time period during which the switching transistor Q1 is ON while the switching transistor Q2 is OFF. Time period from time t1 to time t2 (hereinafter, referred to as "second time period") is a time period during which the switching transistor Q1 is OFF while the switching transistor Q2 is ON. Time period from time t2 to time t3 (hereinafter, referred to as "third time period") is a time period during which the switching transistor Q1 is ON while the switching transistor Q2 is OFF. Time period from time t3 to time t4 (hereinafter, referred to as "fourth time period" ) is a time period during which the switching transistor Q1 is OFF while the switching transistor Q2 is ON.

When the gate-source voltage VGS1 of the switching transistor Q1 exceeds a predetermined threshold, the switching transistor Q1 is in a saturated state. Thus, when the switching transistor Q1 is turned ON (conductive) at time t0 which is the start timing of the first time period, the source-drain current IDS1 starts flowing. In other words, the current IS starts flowing in the positive direction (in the first current path 1102) . Current resonance occurs in the resonance circuit (feeding coil L2 and capacitor C1), so that the current waveform of the current IS in the first time period does not assume a rectangular waveform but the rising and falling edges become slower.

When the switching transistor Q1 is turned OFF (non-conductive) at time t1 which is the start timing of the second time period, the source-drain current IDS1 does not flow. Instead, the switching transistor Q2 is turned ON (conductive) , the source-drain current IDS2 starts flowing. That is, the current IS starts flowing in the negative direction (second current path 1104).

The current IS and inductive current ISS have the same phase, and potential Vq1 and inductive current ISS have the same phase. Therefore, the current waveform of the current IS and voltage waveform of the potential Vq1 synchronizes with each other. By observing the voltage waveform of the potential Vq1, the current phase of the current IS (source-drain currents IDS1 and IDS2) can be measured. In the third, fourth, and subsequent time periods, the same waveforms as in the first and second time periods are repeated.

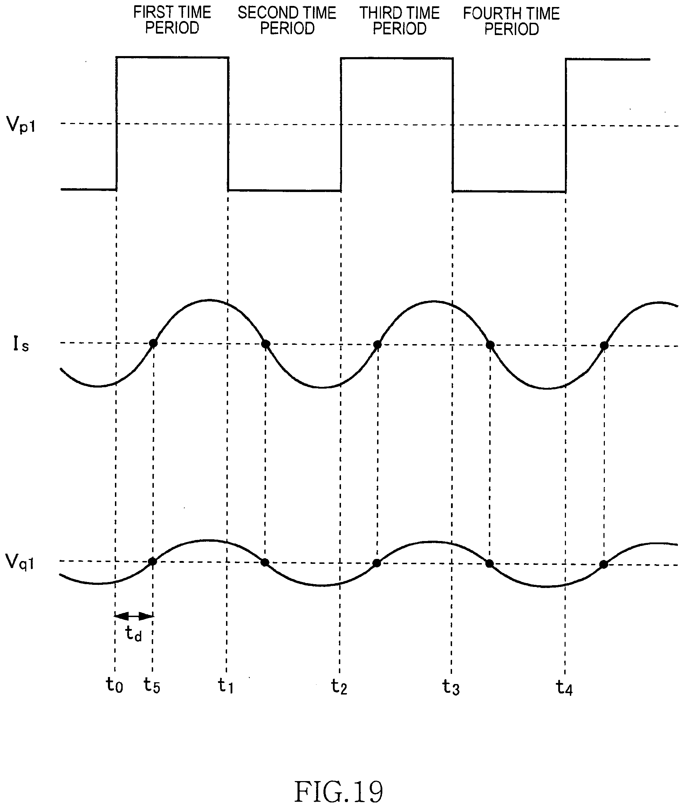

FIG. 19 is a time chart illustrating the voltage/current changing process observed in the case where the drive frequency fo is higher than the resonance frequency fr. In the case where the drive frequency fo is higher than the resonance frequency fr, an inductive reactance component appears in the impedance Z of the resonance circuit, and the current phase of the current IS delays with respect to the voltage phase. As described above, the current IS and potential Vq1 have the same phase, so that by comparing the voltage waveforms of the potential Vp1 and potential Vq1, the phase difference td between the current phase and voltage phase in the supply power can be detected.

As illustrated in FIG. 18, when the drive frequency fo coincides with the resonance frequency fr, the current IS starts flowing at time t1 which is the start timing of the second time period, and the potential Vq1 becomes more than 0. In this case, the phase difference td is 0. When the drive frequency fo is higher than the resonance frequency fr, the current IS starts flowing at time t5 which is later than time t1, and Vq1 becomes more than 0, so that the phase difference td (= t1-t5) becomes less than 0. When the drive frequency fo and resonance frequency fr deviate from each other, the output power efficiency is degraded, and the amplitude of the current IS or potential Vq1 becomes smaller than that at the resonance state.

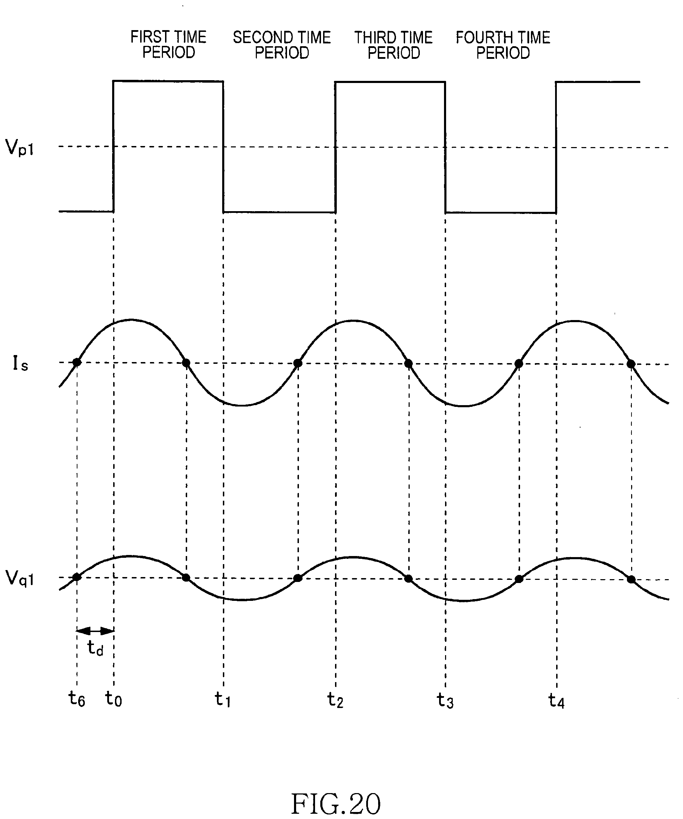

FIG. 20 is a time chart illustrating the voltage/current changing process observed in the case where the drive frequency fo is lower than the resonance frequency fr. In the case where the drive frequency fo is lower than the resonance frequency fr, a capacitive reactance component appears in the impedance Z, and the current phase of the current IS advances with respect to the voltage phase. The current IS starts flowing at time t6 which is earlier than time t1, so that the phase difference td (= t1-t6) becomes more than 0. The amplitude of the current IS or potential Vq1 becomes smaller than that at the resonance time.

FIG. 21 is a time chart illustrating the changing process of various voltages input to the phase detection circuit 1150. The potential Vp1 changes in synchronization with the AC voltage of the oscillator 1202. The potential Vp1 is more than 0 in the first and third time periods. The first waveform rectifier 1142 is an amplifier that outputs a saturated voltage of 5 (V) when the potential Vp1 exceeds a predetermined threshold, e.g., 0.1 (V). Thus, even in the case where the potential Vp1 assumes an analog waveform, the first waveform rectifier 1142 can generate the voltage Vp2 of a digital waveform.

The potential Vq1 changes in synchronization with the current IS. FIG. 21 illustrates a waveform observed in the case where the drive frequency fo is lower than the resonance frequency fr. Thus, the current phase advances with respect to the voltage phase. The second waveform rectifier 1144 amplifies the potential Vq1 of an analog waveform to thereby generate the voltage Vq2 of a digital waveform.

The phase detection circuit 1150 compares rising edge time t0 of the voltage Vp2 and rising edge time t6 of the voltage Vq2 and calculates the phase difference td by subtracting t6 from t0. The conversion of the analog waveforms of the potentials Vp1 and Vq1 into digital waveforms using the first waveform rectifier 1142 and second waveform rectifier 1144 makes it easier for the phase detection circuit 1150 to detect the phase difference td. As a matter of course, the phase detection circuit 1150 may detect the phase difference td by directly comparing the potential Vp1 and potential Vq1.

If the current IS flowing in the feeding coil L2 is set as a measurement target as in the Patent Document 2, a new load is applied to the feeding coil L2 to change the impedance Z of the resonance circuit, resulting in degradation of the Q-value. Connecting the phase detection circuit 1150 to the current path of the resonating feeding coil L2 is like measuring the vibration of a tuning fork while touching the tuning fork. In the wireless power transmission system 1100 according to the second embodiment, the AC magnetic field generated by the feeding coil L2 is utilized to cause the detection coil LSS to generate the inductive current ISS, whereby the current phase is measured. The measurement load is not applied to the power circuit 1200, in particular, the resonance circuit part of the power circuit 1200, so that it is possible to measure the current phase while suppressing the influence on the Q-value.

It is possible to use not only the feeding coil L2 but also the receiving coil L3 or loading coil L4 as the primary coil to constitute a coupling transformer so as to cause the detection coil LSS to generate the inductive current ISS.

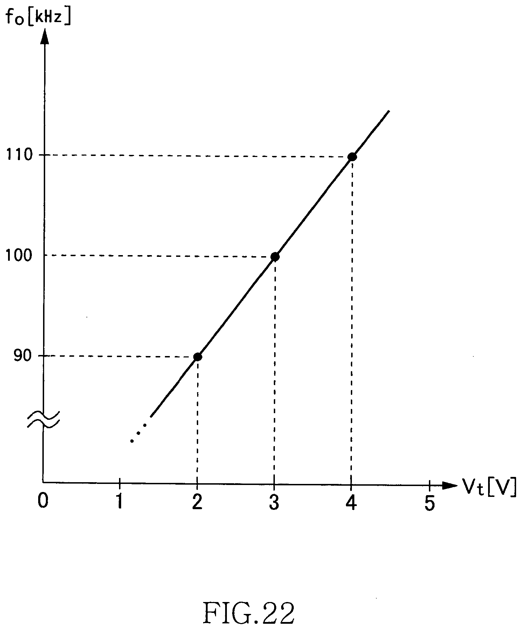

FIG. 22 is a graph illustrating a relationship between the control voltage Vt and drive frequency fo. The relationship of FIG. 22 is set in the drive frequency tracking circuit 1152. The phase difference td is proportional to the variation of the resonance frequency fr. Thus, the phase detection circuit 1150 determines the variation of the control voltage Vt in accordance with the phase difference td, and the drive frequency tracking circuit 1152 determines the drive frequency fo in accordance with the control voltage Vt.

The resonance frequency fr is 100 kHz in the initial state and, accordingly, the drive frequency fo is set to 100 kHz. The control voltage Vt is initially set to 3 (V). Here, it is assumed that the resonance frequency fr is changed from 100 kHz to 90 kHz. Since the drive frequency fo (= 100 kHz) is higher than the resonance frequency fo (= 90 kHz) in this state, the phase difference td is smaller than 0. The phase difference td is proportional to the variation (-10 kHz) of the resonance frequency fr. The phase detection circuit 1150 determines the variation of the control voltage Vt based on the phase difference td. In this example, the phase detection circuit 1150 sets the variation of the control voltage Vt to -1 (V) and outputs new control voltage Vt = 2 (V). The drive frequency tracking circuit 1152 outputs the drive frequency fo = 100 kHs corresponding to the control voltage Vt = 2 (V) according to the relationship represented by the graph of FIG. 22. With the above processing, it is possible to allow the drive frequency fo to automatically track a change of the resonance frequency fr.

The phase detection circuit 1150, the drive frequency tracking circuit 1152, and oscillator 1202 may be implemented as one chip. The processing of the phase detection circuit 1150 or drive frequency tracking circuit 1152 may be performed by software. For example, setting information in which the phase difference td and variation of the drive frequency fo have been previously associated may be retained. In this case, the drive frequency fo is adjusted in accordance with the magnitude of the detected phase difference td.

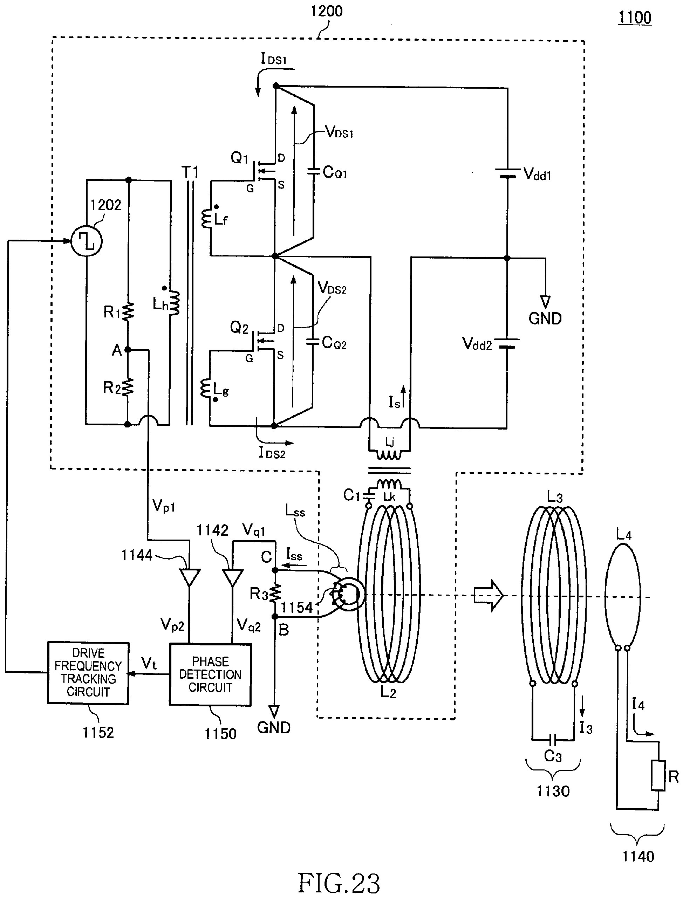

FIG. 23 is a system configuration view of the wireless power transmission system 1100 according to a first modification of the second embodiment. Components designated by the same reference numerals as those of FIG. 13 have the same or corresponding functions as those in FIG. 13. The first modification includes a coupling transformer constituted by a primary coil Lj and a secondary coil Lk. That is, the resonance circuit constituted by the capacitor C1 and feeding coil L2 is physically separated from the power systems such as power supply Vdd1, power supply Vdd2, switching transistors Q1 and Q2, etc. The AC power controlled by the oscillator 1202 is fed to the resonance circuit (capacitor C1 and feeding coil L2) through the coupling transformer.

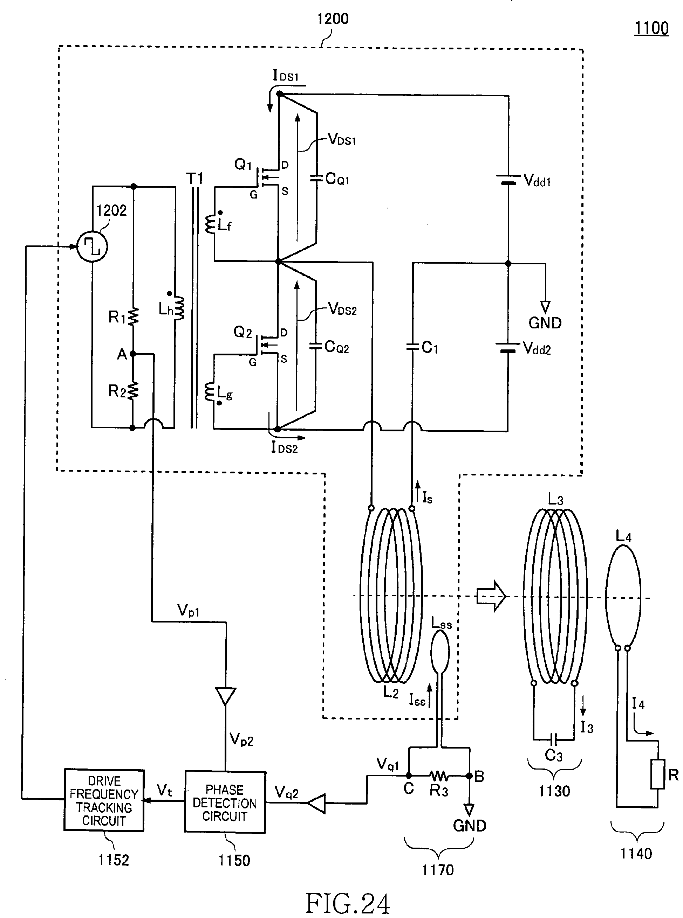

FIG. 24 is a system configuration view of the wireless power transmission system 1100 according to a second modification of the second embodiment. Components designated by the same reference numerals as those of FIG. 13 have the same or corresponding functions as those in FIG. 13. In the system configuration illustrated in FIG. 13, a coupling transformer is constituted by the feeding coil L2 and detection coil LSS that share the core 1154. In the system configuration illustrated in FIG. 24, the current phase is measured using a detection coil circuit 1170. The detection coil circuit 1170 does not share the core 1154 or the like with the power circuit 1200, thereby increasing installation flexibility.

The detection coil circuit 1170 is a circuit in which the detection coil LSS and resistor R3 are connected in series. The detection coil circuit 1170 is installed such that a magnetic flux generated by the feeding coil L2 passes through the detection coil LSS. As in the case of FIG. 13, one end B of the resistor R3 is grounded, and the potential Vq1 is detected from the other end C of the resistor R3. The AC magnetic field generated by the current IS flowing in the feeding coil L2 causes the inductive current ISS to flow in the detection coil circuit 1170. By measuring the potential Vq1 generated by the inductive current ISS, the phase difference td between the voltage phase and current phase can be measured.

The purpose of installing the detection coil 1170 is not to receive power from the feeding coil L2 but to measure the current phase of the AC power fed from the feeding coil L2. Thus, the size of the detection coil LSS can be made sufficiently smaller than that of the feeding coil L2. In the measurement of the phase difference td, the magnetic field by which the inductive current ISS is generated may be generated not only by the current IS flowing in the feeding coil L2 but also by the current I3 flowing in the receiving coil L3 or current I4 flowing in the loading coil L4.

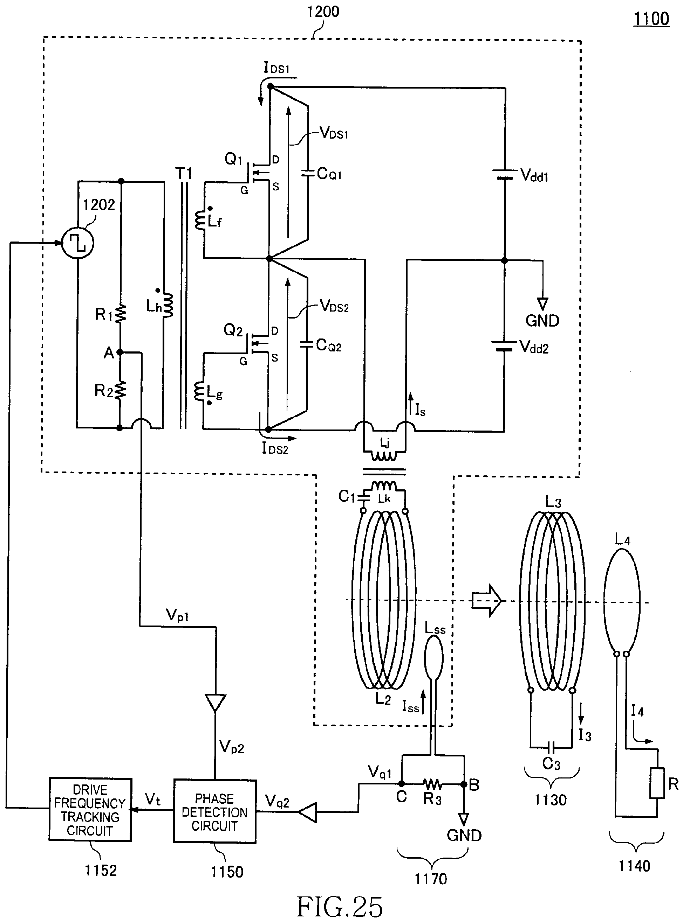

FIG. 25 is a system configuration view of the wireless power transmission system 1100 according to a third modification of the second embodiment. Components designated by the same reference numerals as those of FIGS. 13, 23, and 24 have the same or corresponding functions as those in FIGS. 13, 23, and 24. As in the case of the first modification, the third modification includes a coupling transformer constituted by the primary coil Lj and secondary coil Lk. The resonance circuit constituted by the capacitor C1 and feeding coil L2 is physically separated from the power systems such as power supply Vdd1, power supply Vdd2, switching transistors Q1 and Q2, etc. The AC power controlled by the oscillator 1202 is fed to the resonance circuit (capacitor C1 and feeding coil L2) through the coupling transformer.

### [Third Embodiment: Half-bridge type]

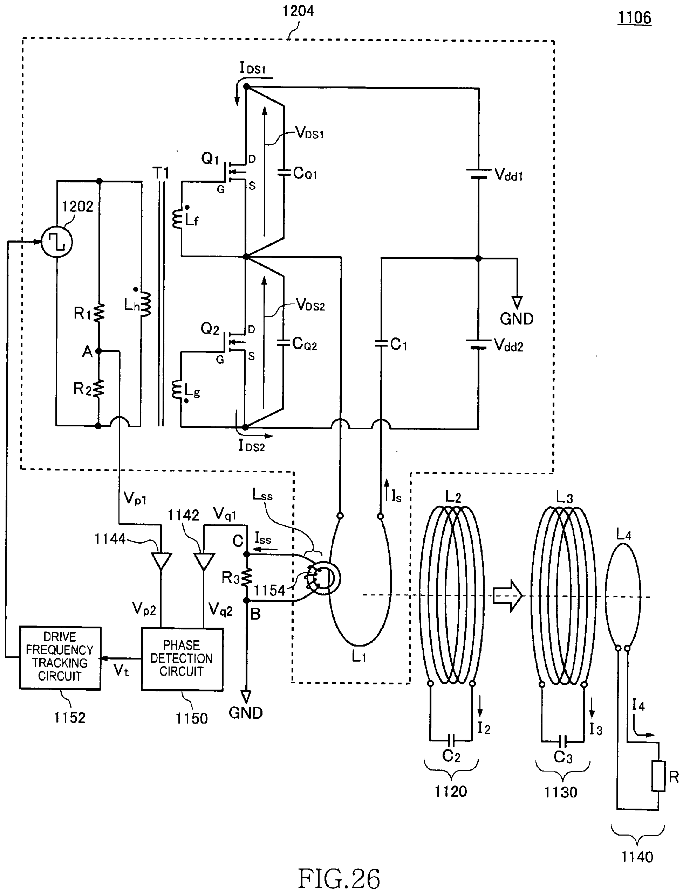

FIG. 26 is a system configuration view of a wireless power transmission system 1106 according to a third embodiment. In the wireless power transmission system 1100 according to the second embodiment, the oscillator 1202 directly drive the feeding coil L2; while in the wireless power transmission system 1106 according to the third embodiment, the oscillator 1202 does not drive the feeding coil L2 but drives the exciting coil L1. The other components of the wireless power transmission system 1106 are the same as those in FIG. 13, etc. Components designated by the same reference numerals as those of FIG. 13, etc. have the same or corresponding functions as those in FIG. 13, etc.

A power circuit 1204 feeds AC power to the exciting coil L1 at the resonance frequency fr. The exciting coil L1 and capacitor C1 constitute a resonance circuit of the resonance frequency fr. A feeding coil circuit 1120 is a circuit in which the feeding coil L2 and capacitor C2 are connected in series. The exciting coil L1 and feeding coil L2 face each other. The distance between the exciting coil L1 and feeding coil L2 is as comparatively small as about 10 mm. Thus, the exciting coil L1 and feeding coil L2 are electromagnetically strongly coupled to each other. When current IS is made to flow in the exciting coil L1, an electromotive force occurs in the feeding coil circuit 1120 to cause current I2 to flow in the feeding coil circuit 1120. The direction of an arrow in the diagram of the feeding coil circuit 1120 indicates the positive direction, and direction opposite to the direction of the arrow indicates the negative direction. The flowing directions of the current IS and current I2 are opposite (having opposite phases). The magnitude of the current I2 is significantly larger than that of the current IS. The values of the feeding coil L2 and capacitor C2 are set such that the resonance frequency fr of the feeding coil circuit 1120 is 100 kHz.

Also in the wireless power transmission system 1106 of the third embodiment, the resistors R1 and R2 are connected to both ends of the oscillator 1202, and the voltage phase is measured from the potential Vp1 at the connection point A between the resistors R1 and R2. In the third embodiment, the detection coil LSS is provided near the exciting coil L1, and the detection coil LSS and exciting coil L1 constitute a coupling transformer. Inductive current ISS is made to flow in the detection coil LSS by a magnetic field generated by AC current IS. The current phase is measured based on the inductive current ISS according to the same method as the first embodiment.

Also in the third embodiment, it is possible to use not only the exciting coil L1 but also the feeding coil L2, receiving coil L3 or loading coil L4 as the primary coil to constitute a coupling transformer so as to cause the detection coil LSS to generate the inductive current ISS. The inductive current ISS may be generated using the detection coil circuit 1170 described with reference to FIGS. 24 and 25.

### [Fourth Embodiment: Push-pull type]

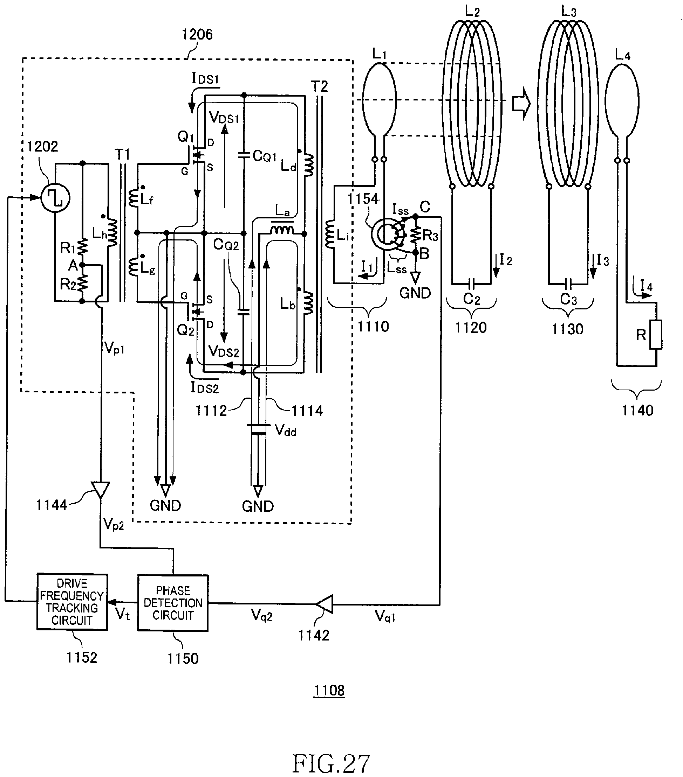

FIG. 27 is a system configuration view of a wireless power transmission system 1108 according to a fourth embodiment. The wireless power transmission system 1108 includes a power circuit 1206, an exciting circuit 1110, a feeding coil circuit 1120, a receiving coil circuit 1130, and a loading circuit 1140. A distance of several meters is provided between the feeding coil circuit 1120 and receiving coil circuit 1130. The wireless power transmission system 1108 mainly aims to feed power from the feeding coil circuit 1120 to receiving coil circuit 1130 by wireless. Components designated by the same reference numerals as those of FIG. 13 and FIGS. 23 to 26 have the same or corresponding functions as those described above.

The exciting circuit 1110 is a circuit in which an exciting coil L1 and a transformer T2 secondary coil Li are connected in series. The exciting circuit 1110 receives AC power from the power circuit 1206 through the transformer T2 secondary coil Li. The transformer T2 secondary coil Li constitutes a coupling transformer T2 together with a transformer T2 primary coil Ld and a transformer T2 primary coil Lb and receives AC power by electromagnetic induction. The number of windings of the exciting coil L1 is 1, diameter of the wire of the exciting coil L1 is 3 mm, and diameter of the exciting coil L1 itself is 210 mm. Current I1 flowing in the exciting circuit 1110 is AC. The direction of an arrow in the diagram of the exciting circuit 1110 indicates the positive direction, and direction opposite to the direction of the arrow indicates the negative direction.

The feeding coil circuit 1120 has the same configuration as that of the feeding coil circuit 1120 described in the third embodiment and resonates at the resonance frequency fr = 100 kHz. The receiving coil circuit 1130 and loading circuit 1140 have the same configurations as those of the second and third embodiments.

The power circuit 1206 is a push-pull circuit operating at a drive frequency fo and has a vertically symmetrical configuration as illustrated in FIG. 27. The exciting circuit 1110 receives AC power at the drive frequency fo from the power circuit 1206. In this case, the currents I1 to I4 at the drive frequency fo flow in the exciting circuit 1110, feeding coil circuit 1120, receiving coil circuit 1130, and loading circuit 1140. When the drive frequency fo and resonance frequency fr coincide with each other, that is, when the drive frequency fo assumes 100 kHz, the feeding coil circuit 1120 and receiving coil circuit 1130 magnetically resonate, maximizing the power transmission efficiency.

An oscillator 1202 is connected to the primary side of a gate-drive transformer T1 included in the power circuit 1206. The oscillator 1202 generates AC voltage at the drive frequency fo. The AC voltage causes current to flow in a transformer T1 primary coil Lh alternately in both positive and negative directions. The transformer T1 primary coil Lh, transformer T1 secondary coil Lg, and transformer T1 secondary coil Lf constitute a gate-drive coupling transformer T1. Electromagnetic induction causes current to flow also in the transformer T1 secondary coil Lg and transformer T1 secondary coil Lf alternately in both positive and negative directions.

The secondary coil of the transformer T1 is center-point grounded. That is, one ends of the transformer T1 secondary coil Lf and transformer T1 secondary coil Lg are connected to each other and directly grounded. The other end of the transformer T1 secondary coil Lf is connected to the gate of a switching transistor Q1, and the other end of the transformer T1 secondary coil Lg is connected to the gate of a switching transistor Q2. The source of the switching transistor Q1 and source of the switching transistor Q2 are also grounded. Thus, when the oscillator 1202 generates AC voltage of the drive frequency fo, voltage Vx (Vx>0) of the drive frequency fo is applied alternately to the gates of the switching transistors Q1 and Q2. As a result, the switching transistors Q1 and Q2 are alternately turned on/off at the drive frequency fo.

The drain of the switching transistor Q1 is connected in series to a transformer T2 primary coil Ld. Similarly, the drain of the switching transistor Q2 is connected in series to a transformer T2 primary coil Lb. A smoothing inductor La and a power supply Vdd are connected to the connection point between the transformer T2 primary coil Ld and transformer T2 primary coil Lc. Further, a capacitor CQ1 is connected in parallel to the source-drain of the switching transistor Q1, and a capacitor CQ2 is connected in parallel to the source-drain of the switching transistor Q2.

The capacitor CQ1 is inserted so as to shape the voltage waveform of the source-drain voltage VDS1, and capacitor CQ2 is inserted so as to shape the voltage waveform of the source-drain voltage VDS2. Even if the capacitors CQ1 and CQ2 are omitted, the wireless power feeding using the power circuit 1206 can be achieved. In particular, in the case where the drive frequency fo is low, it is easily possible to maintain the power transmission efficiency even if the capacitors are omitted.

The input impedance of the exciting circuit 1110 is 50 (Ω). The number of windings of the transformer T2 primary coil Lb and the number of windings of the transformer T2 primary coil Ld are set such that the output impedance of the power circuit 1206 is equal to the input impedance of 50 (Ω). When the output impedance of the power circuit 1206 and input impedance of the exciting circuit 1110 coincide with each other, the power circuit 1206 has the maximum output.

When the switching transistor Q1 is turned conductive (ON), the switching transistor Q2 is turned non-conductive (OFF). A main current path (hereinafter, referred to as "first current path 1112") at this time is from the power supply Vdd through the smoothing inductor La, transformer T2 primary coil Ld, and switching transistor Q1 to the ground. The switching transistor Q1 functions as a switch for controlling conduction/non-conduction of the first current path 1112.

When the switching transistor Q2 is turned conductive (ON), the switching transistor Q1 is turned non-conductive (OFF). A main current path (hereinafter, referred to as "second current path 1114") at this time is from the power supply Vdd through the smoothing inductor La, transformer T2 primary coil Lb, and switching transistor Q2 to the ground. The switching transistor Q2 functions as a switch for controlling conduction/non-conduction of the second current path 1114.

Also in the wireless power transmission system 1108, the resistors R1 and R2 are connected to both ends of the oscillator 1202, and the voltage phase is measured from the potential Vp1 at the connection point A between the resistors R1 and R2. In the fourth embodiment, the detection coil LSS is provided near the exciting circuit 1110, and a part of the exciting circuit 1110 and detection coil LSS constitute a coupling transformer. Inductive current ISS is made to flow in the detection coil LSS by a magnetic field generated by AC current I1. The current phase is measured based on the inductive current ISS according to the same method as the first embodiment or second embodiment. The phase difference td between the current phase and voltage phase is detected by the phase detection circuit 1150, and the drive frequency tracking circuit 1152 adjusts the drive frequency fo of the oscillator 1202, thereby maintaining the resonance state.

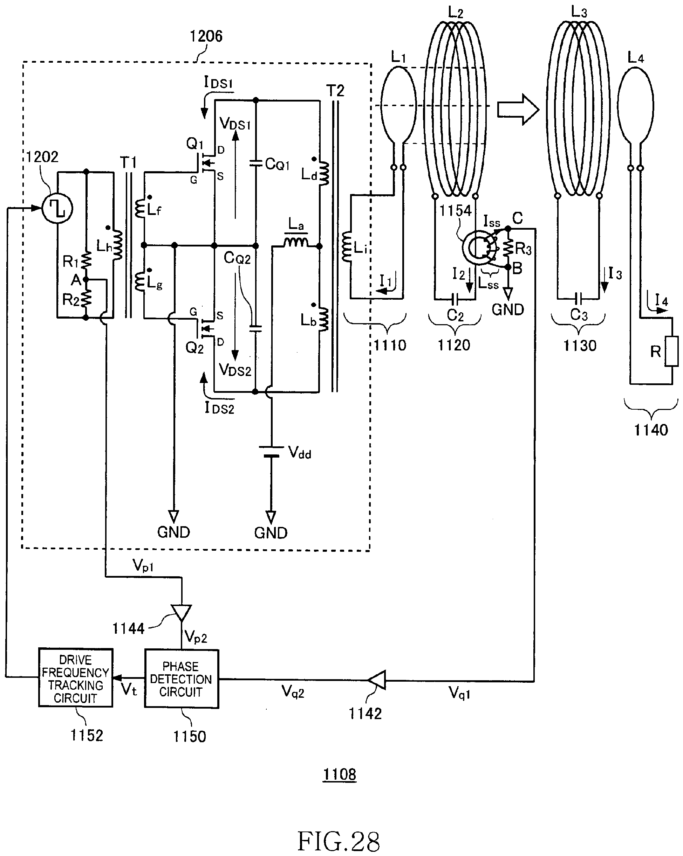

FIG. 28 is a system configuration view of the wireless power transmission system 1108 according to a first modification of the fourth embodiment. Components designated by the same reference numerals as those of FIG. 27 have the same or corresponding functions as those in FIG. 27. In the system configuration of FIG. 27, the exciting circuit 1110 and detection coil LSS constitute a coupling transformer by sharing the core 1154. However, in the system configuration of FIG. 28, the feeding coil circuit 1120 and detection coil LSS constitute a coupling transformer by sharing the core 1154.

It is possible to use not only the exciting circuit 1110 or feeding coil circuit 1120 but also the receiving coil circuit 1130 or loading circuit 1140 as the primary coil to constitute a coupling transformer so as to cause the detection coil LSS to generate the inductive current ISS. The inductive current ISS may be generated using the detection coil circuit 1170 described with reference to FIGS. 24 and 25.

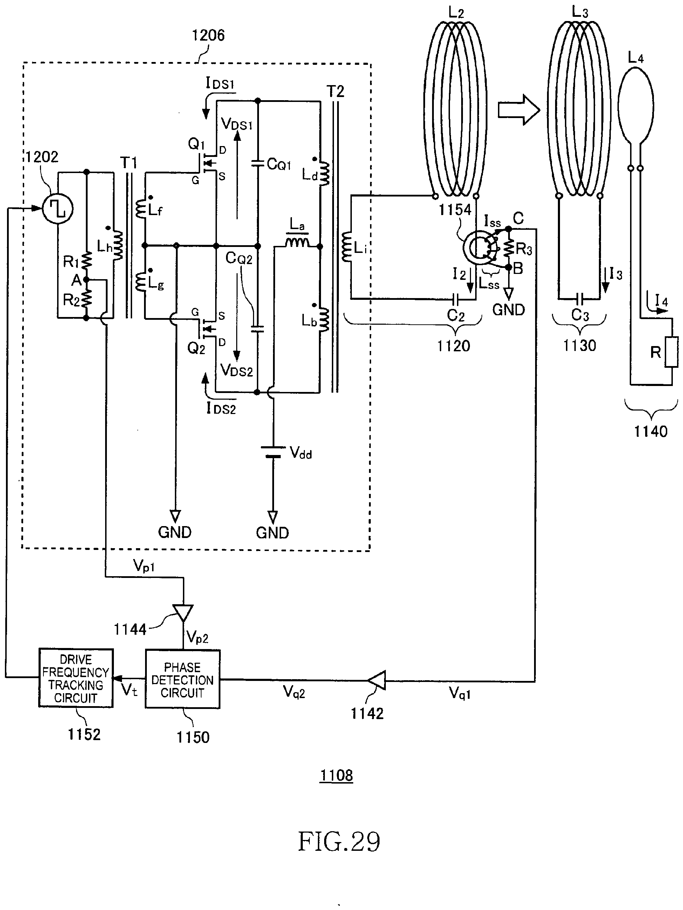

FIG. 29 is a system configuration view of the wireless power transmission system 1108 according to a second modification of the fourth embodiment. Components designated by the same reference numerals as those of FIGS. 27 and 28 have the same or corresponding functions as those in FIGS. 27 and 28. In the wireless power transmission system 1108 according to the second modification, the power circuit 1206 directly drives the feeding coil circuit 1120 without intervention of the exciting circuit 1110.

The feeding coil circuit 1120 of the wireless power transmission system 1108 is a circuit in which the transformer T2 secondary coil Li is connected in series to the feeding coil L2 and capacitor C2. The transformer T2 secondary coil Li constitutes the coupling transformer T2 together with the transformer T2 primary coil Lb and transformer T2 primary coil Ld and receives AC power from the power circuit 1206 by electromagnetic induction. As described above, the AC power may be directly fed from the power circuit 1206 to the feeding coil circuit 1120 without intervention of the exciting circuit 1110.

The wireless power transmission systems 300, 1100, 1106, and 1108 have been described based on the respective embodiments . In the first embodiment, the exciting circuit 110, feeding coil circuit 120, receiving coil circuit 130, and loading circuit 140 resonate at the same resonance frequency fr, so that if some load is added to these circuits, the Q-value reacts with high sensitivity. In the case of the wireless power transmission system 300 of the first embodiment, the current I2 flowing in the feeding coil L2 is not set as a measurement target, but current passing through the switching transistor Q2 included in the power circuit 200 is set as the measurement target, making it easy to suppress the influence on the Q-value of the feeding coil circuit 120. That is, it is possible to always monitor whether the drive frequency fo and resonance frequency fr coincide with each other while suppressing influence on the system's resonance characteristics caused by the measurement procedure.

As described with reference to FIG. 5, etc., in the case of wireless power feeding of the magnetic field resonance type, the coincidence degree between the resonance frequency fr and drive frequency fo gives great influence on the power transmission efficiency. Providing the phase detection circuit 150 or drive frequency tracking circuit 152 allows the drive frequency fo to automatically track a change of the resonance frequency fr, making it easy to maintain the power transmission efficiency at its maximum value even if use conditions are changed.

In the case where the wireless power transmission system 300 according to the first embodiment was used to perform an experiment under a condition that the distance between the exciting coil L1 and feeding coil L2 is made to equal to the diameters of the feeding coil L2 and receiving coil L3, about 70 % of the power transmitted from the feeding coil circuit 120 could be taken from the loading circuit 140.

Also in the second to fourth embodiments, the feeding coil L2, receiving coil L3, and loading coil L4 resonate at the same resonance frequency fr, so that if some load is connected to these coils, the Q-value reacts with high sensitivity. The same can be said in the case where the exciting coil L1 is used. In the second to fourth embodiments, the AC power itself to be transmitted/received is not set as a measurement target, but the inductive current ISS is generated by the AC magnetic field generated at the transmission/reception time of the AC power so as to measure the current phase. Therefore, it is easily suppress the influence of the measurement procedure on the system's resonance characteristics (Q-value).

Also in the second to fourth embodiments, providing the phase detection circuit 1150 or drive frequency tracking circuit 1152 allows the drive frequency fo to automatically track a change of the resonance frequency fr, making it easy to maintain the power transmission efficiency at its maximum value even if use conditions are changed.

The above embodiments are merely illustrative of the present invention and it will be appreciated by those skilled in the art that various modifications may be made to the components of the present invention and a combination of processing processes and that the modifications are included in the scope of the present invention as defined by the claims.

## Claims

1. A wireless power feeder for feeding power by wireless from a feeding coil (L2) to a receiving coil (L3) at a resonance frequency (fr) of the feeding coil (L2) and receiving coil (L3), comprising:
a resonance circuit that includes a first coil (L2) and a capacitor (C1) which are connected in series;
a first switch (Q1) adapted to control supply of power fed via a first current path (1102) to the resonance circuit, wherein the first current path (1102) is a path through the first switch (Q1);
a second switch (Q2) adapted to control supply of power fed via a second current path (1104) to the resonance circuit, wherein the second current path (1104) is a path through the second switch (Q2);
a power transmission control circuit adapted to make the first and second switches (Q1, Q2) alternately conductive to cause the resonance circuit to resonate to transmit AC power from the first coil (L2) serving as the feeding coil (L2) to the receiving coil (L3);
a second coil (LSS) adapted to generate inductive current (ISS) using a magnetic field generated by the AC power; and
a phase detection circuit (1150) adapted to detect a phase difference between voltage phase and current phase of the AC power, wherein the phase detection circuit (1150) is adapted to measure the phase of the inductive current (ISS) flowing in the second coil (LSS) to achieve measurement of the current phase of the AC current,
**characterized in that**
the power transmission control circuit is an oscillator (1202) adapted to generate AC voltage at a drive frequency (f0);
the oscillator (1202) is adapted to feed the AC voltage alternately to the first switch (Q1) and the second switch (Q2) ;
the oscillator output is connected to a phase detection circuit input; and
the phase detection circuit (1150) is adapted to measure the phase of the AC voltage generated by the oscillator (1202) to achieve measurement of the voltage phase of the AC power.

2. The wireless power feeder as claimed in claim 1, wherein
a current path passing through the first and second switches (Q1, Q2) and a current path passing through the resonance circuit are separated by a coupling transformer, and
AC power is fed to the resonance circuit through the coupling transformer.

3. The wireless power feeder as claimed in claim 1 or 2, further comprising a drive frequency tracking circuit (1152) adapted to adjust the drive frequency (f0) of the power transmission control circuit so as to reduce the detected phase difference to allow the drive frequency (f0) to track the resonance frequency (fr).

4. The wireless power feeder as claimed in any one of claims 1 to 3, wherein
the second coil (LSS) is wounded around a toroidal core (1154), and
a part of the first coil (L2) is made to pass through the toroidal core to constitute a coupling transformer by the first and second coils (L2, LSS).

5. The wireless power feeder as claimed in any one of claims 1 to 4, wherein
a resistor (R3) is connected in parallel to both ends of the second coil, and
the phase detection circuit (1150) is adapted to measure the current phase from a change in voltage applied to the resistor (R3).

6. The wireless power feeder as claimed in any one of claims 1 to 5, further comprising:
a first waveform rectifier (1142) adapted to convert an analog waveform having the same phase as that of a current waveform of the AC power into a digital waveform, wherein the second coil (LSS) is connected to the phase detection circuit (1150) through the first wave form rectifier (1142); and
a second waveform rectifier (1144) adapted to convert an analog waveform having the same phase as that of a voltage waveform of the AC power into a digital waveform, wherein the oscillator (1202) is connected to the phase detection circuit (1150) through the second waveform rectifier (1144), wherein
the phase detection circuit (1150) is adapted to compare edges of two digital waveforms to detect the phase difference.

7. A wireless power feeder for feeding power by wireless from a feeding coil (L2) to a receiving coil (L3) at a resonance frequency (fr) of the feeding coil (L2) and receiving coil (L3), comprising:
a power circuit (1200);
the feeding coil (L2);
an exciting coil (L1) that is magnetically coupled to the feeding coil (L2) and adapted to feed AC power fed from the power circuit to the feeding coil (L2);
a detection coil (LSS) adapted to generate inductive current (ISS) using a magnetic field generated by the AC power; and
a phase detection circuit (1150) adapted to detect a phase difference between voltage phase and current phase of the AC power, wherein
the power circuit includes first and second current paths (1102, 1104) and makes first and second switches (Q1, Q2) connected in series, respectively, to the first and second current paths (1102, 1104) alternately conductive to feed the AC power to the exciting coil (L1), wherein the first current path (1102) is a path through the first switch (Q1), wherein the second current path (1104) is a path through the second switch (Q2); and
the phase detection circuit (1150) is adapted to measure a phase of the inductive current (ISS) flowing in the detection coil (LSS) to achieve measurement of the current phase of the AC power,
**characterized in that**
the power circuit includes an oscillator (1202) which is adapted to generate AC voltage at a drive frequency (f0);
the oscillator (1202) is adapted to feed the AC voltage alternately to the first switch (Q1) and the second switch (Q2) ;
the oscillator output is connected to a phase detection circuit input; and
the phase detection circuit (1150) is adapted to measure the phase of the AC voltage generated by the oscillator (1202) to achieve measurement of the voltage phase of the AC power.

8. The wireless power feeder as claimed in claim 7, wherein
the detection coil (LSS) is a coil adapted to generate the inductive current (ISS) using a magnetic field generated by the AC power flowing through the feeding coil (L2).

9. The wireless power feeder as claimed in claim 7, wherein
the detection coil (LSS) is a coil adapted to generate the inductive current (ISS) using a magnetic field generated by the AC power flowing through the exciting coil (L1) .

10. The wireless power feeder as claimed in any one of claims 7 to 9, further comprising a drive frequency tracking circuit (1152) adapted to adjust the drive frequency (f0) of a power transmission control circuit so as to reduce the detected phase difference to allow the drive frequency (f0) to track the resonance frequency (fr).

11. The wireless power feeder as claimed in claim 7, wherein
the detection coil (LSS) is wounded around a toroidal core (1154), and
a part of the exciting coil (L1) is made to pass through the toroidal core (1154) to constitute a coupling transformer by the exciting coil (L1) and detection coil (LSS).

12. The wireless power feeder as claimed in any one of claims 7 to 11, wherein
the detection coil (LSS) is wounded around a toroidal core (1154), and
a part of the feeding coil (L2) is made to pass through the toroidal core (1154) to constitute a coupling transformer by the feeding coil (L2) and detection coil (LSS).

13. The wireless power feeder as claimed in any one of claims 7 to 12, wherein
a resistor (R3) is connected in parallel to both ends of the detection coil (LSS), and
the phase detection circuit (1150) is adapted to measure the current phase from a change in voltage applied to the resistor (R3).

14. The wireless power feeder as claimed in any one of claims 7 to 13, further comprising:
a first waveform rectifier (1142) adapted to convert an analog waveform having the same phase as that of a current waveform of the AC power into a digital waveform, wherein the detection coil (LSS) is connected to the phase detection circuit (1150) through the first wave form rectifier (1142); and
a second waveform rectifier (1144) adapted to convert an analog waveform having the same phase as that of a voltage waveform of the AC power into a digital waveform, wherein the oscillator (1202) is connected to the phase detection circuit (1150) through the second waveform rectifier (1144), wherein
the phase detection circuit (1150) is adapted to compare edges of two digital waveforms to detect the phase difference.

15. A wireless power transmission system comprising:
a wireless power feeder as claimed in claim 1 or 7;
the receiving coil (L3); and
a loading coil (L4) magnetically coupled to the receiving coil (L3) and adapted to receive power that the receiving coil (L3) has received from the feeding coil (L2).

## Patentansprüche

1. Drahtlose Energiezuführung zur drahtlosen Energiezuführung von einer Speisespule (L2) zu einer Empfangsspule (L3) bei einer Resonanzfrequenz (fr) der Speisespule (L2) und der Empfangsspule (L3), mit:
einem Resonanzkreis, der eine erste Spule (L2) und einen Kondensator (C1) umfasst, die in Reihe geschaltet sind,
einem ersten Schalter (Q1), der geeignet ist, die Zufuhr von Energie zu steuern, die über einen ersten Strompfad (1102) dem Resonanzkreis zugeführt wird, wobei der erste Strompfad (1102) ein Pfad durch den ersten Schalter (Q1) ist,
einem zweiten Schalter (Q2), der geeignet ist, die Zufuhr von Energie zu steuern, die über einen zweiten Strompfad (1104) dem Resonanzkreis zugeführt wird, wobei der zweite Strompfad (1104) ein Pfad durch den zweiten Schalter (Q2) ist,
einer Energieübertragungs-Steuerschaltung, die so beschaffen ist, dass sie den ersten und den zweiten Schalter (Q1, Q2) abwechselnd leitend macht, um den Resonanzkreis in Resonanz zu versetzen, um Wechselstrom von der ersten Spule (L2), die als Speisespule (L2) dient, an die Empfangsspule (L3) zu übertragen,
einer zweiten Spule (LSS) zur Erzeugung von induktivem Strom (ISS) unter Verwendung eines durch den Wechselstrom erzeugten Magnetfeldes, und
einer Phasendetektionsschaltung (1150), die angepasst ist, um eine Phasendifferenz zwischen der Spannungsphase und der Stromphase des Wechselstroms zu detektieren, wobei die Phasendetektionsschaltung (1150) angepasst ist, um die Phase des induktiven Stroms (ISS) zu messen, der in der zweiten Spule (LSS) fließt, um eine Messung der Stromphase des Wechselstroms zu erreichen,
**dadurch gekennzeichnet, dass**
Energieübertragungs-Steuerschaltung ein Oszillator (1202) ist, der eine Wechselspannung mit einer Treiberfrequenz (f0) erzeugen kann,
der Oszillator (1202) so ausgelegt ist, dass er die Wechselspannung abwechselnd an den ersten Schalter (Q1) und den zweiten Schalter (Q2) liefert,
der Oszillatorausgang mit dem Eingang einer Phasendetektionsschaltung verbunden ist und
die Phasendetektionsschaltung (1150) so ausgelegt ist, dass sie die Phase der von dem Oszillator (1202) erzeugten Wechselspannung misst, um eine Messung der Spannungsphase der Wechselstromleistung zu erreichen.

2. Drahtlose Energiezuführung nach Anspruch 1, wobei
ein Strompfad, der durch den ersten und zweiten Schalter (Q1, Q2) verläuft, und ein Strompfad, der durch den Resonanzkreis verläuft, durch einen Koppeltransformator getrennt sind, und
der Wechselstrom über den Koppeltransformator in den Resonanzkreis eingespeist wird.

3. Drahtlose Energiezuführung nach Anspruch 1 oder 2 mit ferner einer Treiberfrequenz-Nachführschaltung (1152), die so beschaffen ist, dass sie die Treiberfrequenz (f0) der Energieübertragungs-Steuerschaltung so einstellt, dass die erfasste Phasendifferenz verringert wird, damit die Treiberfrequenz (f0) der Resonanzfrequenz (fr) folgen kann.

4. Drahtlose Energiezuführung nach einem der Ansprüche 1 bis 3 4, wobei
die zweite Spule (LSS) um einen Ringkern (1154) gewickelt ist und
ein Teil der ersten Spule (L2) durch den Ringkern geführt wird, um durch die erste und die zweite Spule (L2, LSS) einen Koppeltransformator zu bilden.

5. Drahtlose Energiezuführung nach einem der Ansprüche 1 bis 4, wobei
ein Widerstand (R3) parallel zu beiden Enden der zweiten Spule geschaltet ist und
die Phasendetektionsschaltung (1150) so ausgelegt ist, dass sie die Stromphase anhand einer Änderung der an den Widerstand (R3) angelegten Spannung misst.

6. Drahtlose Energiezuführung nach einem der Ansprüche 1 bis 5 mit ferner:
einem ersten Wellenform-Gleichrichter (1142), der so ausgelegt ist, dass er eine analoge Wellenform, die die gleiche Phase wie die einer Stromwellenform der Wechselstromleistung hat, in eine digitale Wellenform umwandelt, wobei die zweite Spule (LSS) über den ersten Wellenform-Gleichrichter (1142) mit der Phasendetektionsschaltung (1150) verbunden ist, und
einen zweiten Wellenform-Gleichrichter (1144), der so ausgelegt ist, dass er eine analoge Wellenform, die die gleiche Phase wie die einer Spannungswellenform der Wechselstromleistung hat, in eine digitale Wellenform umwandelt, wobei der Oszillator (1202) über den zweiten Wellenform-Gleichrichter (1144) mit der Phasendetektionsschaltung (1150) verbunden ist, wobei
die Phasendetektionsschaltung (1150) geeignet ist, die Flanken zweier digitaler Wellenformen zu vergleichen, um die Phasendifferenz zu erkennen.

7. Drahtlose Energiezuführung zur drahtlosen Energiezuführung von einer Speisespule (L2) zu einer Empfangsspule (L3) bei einer Resonanzfrequenz (fr) der Speisespule (L2) und der Empfangsspule (L3), mit:
einer Versorgungsschaltung (1200),
der Speisespule (L2),
einer Erregerspule (L1), die magnetisch mit der Speisespule (L2) gekoppelt ist und so beschaffen ist, dass sie der Speisespule (L2) Wechselstrom zuführt, der aus der Versorgungsschaltungen stammt,
einer Detektionsspule (LSS), die so ausgelegt ist, dass sie unter Verwendung eines durch die Wechselstromversorgung erzeugten Magnetfeldes einen induktiven Strom (ISS) erzeugt, und
einer Phasendetektionsschaltung (1150), die geeignet ist, eine Phasendifferenz zwischen der Spannungsphase und der Stromphase des Wechselstroms zu erkennen, wobei
die Versorgungsschaltung einen ersten und einen zweiten Strompfad (1102, 1104) umfasst und einen ersten und einen zweiten Schalter (Q1, Q2), die jeweils in Reihe mit dem ersten und dem zweiten Strompfad (1102, 1104) verbunden sind, abwechselnd leitend macht, um die Wechselstromleistung der Erregerspule (L1) zuzuführen, wobei der erste Strompfad (1102) ein Pfad durch den ersten Schalter (Q1) ist, wobei der zweite Strompfad (1104) ein Pfad durch den zweiten Schalter (Q2) ist, und
die Phasendetektionsschaltung (1150) so ausgelegt ist, dass sie eine Phase des in der Detektionsspule (LSS) fließenden induktiven Stroms (ISS) misst, um eine Messung der Stromphase der Wechselstromleistung zu erreichen,
**dadurch gekennzeichnet, dass**
die Versorgungsschaltung einen Oszillator (1202) enthält, der eine Wechselspannung mit einer Treiberfrequenz (f0) erzeugen kann,
der Oszillator (1202) so ausgelegt ist, dass er die Wechselspannung abwechselnd an den ersten Schalter (Q1) und den zweiten Schalter (Q2) liefert,
der Oszillatorausgang mit dem Eingang einer Phasendetektionsschaltung verbunden ist und
die Phasendetektionsschaltung (1150) so ausgelegt ist, dass sie die Phase der von dem Oszillator (1202) erzeugten Wechselspannung misst, um eine Messung der Spannungsphase der Wechselstromleistung zu erreichen.

8. Drahtlose Energiezuführung nach Anspruch 7, wobei
die Detektionsspule (LSS) eine Spule ist, die den induktiven Strom (ISS) mit Hilfe eines Magnetfeldes erzeugt, das durch den Wechselstrom erzeugt wird, der durch die Speisespule (L2) fließt.

9. Drahtlose Energiezuführung nach Anspruch 7, wobei
die Detektionsspule (LSS) eine Spule ist, die den induktiven Strom (ISS) mit Hilfe eines Magnetfeldes erzeugt, das durch den Wechselstrom erzeugt wird, der durch die Erregerspule (L1) fließt.

10. Drahtlose Energiezuführung nach einem der Ansprüche 7 bis 9 mit ferner einer Treiberfrequenz-Nachführschaltung (1152), die so beschaffen ist, dass sie die Treiberfrequenz (f0) einer Energieübertragungs-Steuerschaltung so einstellt, dass die erfasste Phasendifferenz verringert wird, damit die Treiberfrequenz (f0) der Resonanzfrequenz (fr) folgen kann.

11. Drahtlose Energiezuführung nach Anspruch 7, wobei
die Detektionsspule (LSS) ist um einen Ringkern (1154) gewickelt und
ein Teil der Erregerspule (L1) durch den Ringkern (1154) geführt ist, um einen Koppeltransformator aus der Erregerspule (L1) und der Detektionsspule (LSS) zu bilden.

12. Die drahtlose Energiezuführung nach einem der Ansprüche 7 bis 11, wobei
die Detektionsspule (LSS) um einen Ringkern (1154) gewickelt ist und
ein Teil der Speisespule (L2) durch den Ringkern (1154) geführt ist, um einen Koppeltransformator aus der Speisespule (L2) und der Detektionsspule (LSS) zu bilden.

13. Drahtlose Energiezuführung nach einem der Ansprüche 7 bis 12, wobei
ein Widerstand (R3) parallel zu beiden Enden der Detektionsspule (LSS) geschaltet ist und
die Phasendetektionsschaltung (1150) so ausgelegt ist, dass sie die Stromphase anhand einer Änderung der an den Widerstand (R3) angelegten Spannung misst.

14. Drahtlose Energiezuführung nach einem der Ansprüche 7 bis 13 mit ferner:
einem ersten Wellenform-Gleichrichter (1142), der so ausgelegt ist, dass er eine analoge Wellenform, die die gleiche Phase wie die einer Stromwellenform der Wechselstromleistung hat, in eine digitale Wellenform umwandelt, wobei die Erfassungsspule (LSS) über den ersten Wellenform-Gleichrichter (1142) mit der Phasendetektionsschaltung (1150) verbunden ist, und
einem zweiten Wellenform-Gleichrichter (1144), der dazu ausgelegt ist, eine analoge Wellenform, die die gleiche Phase wie die einer Spannungswellenform der Wechselstromleistung hat, in eine digitale Wellenform umzuwandeln, wobei der Oszillator (1202) über den zweiten Wellenform-Gleichrichter (1144) mit der Phasendetektionsschaltung (1150) verbunden ist, wobei
die Phasendetektionsschaltung (1150) geeignet ist, die Flanken zweier digitaler Wellenformen zu vergleichen, um die Phasendifferenz zu erkennen.

15. Drahtloses Energieübertragungssystem, das Folgendes umfasst:
eine drahtlose Energiezuführung nach Anspruch 1 oder 7,
die Empfangsspule (L3) und
eine Lastspule (L4), die magnetisch mit der Empfangsspule (L3) gekoppelt ist und so beschaffen ist, dass sie den Strom empfängt, den die Empfangsspule (L3) von der Speisespule (L2) empfangen hat.

## Revendications

1. Dispositif d'alimentation en puissance sans fil pour une alimentation en puissance par voie sans fil d'une bobine d'alimentation (L2) à une bobine de réception (L3) à une fréquence de résonance (fr) de la bobine d'alimentation (L2) et de la bobine de réception (L3), comprenant :
un circuit de résonance qui comporte une première bobine (L2) et un condensateur (C1) qui sont connectés en série ;
un premier commutateur (Q1) adapté pour commander l'apport d'alimentation en puissance via un premier trajet de courant (1102) au circuit de résonance, dans lequel le premier trajet de courant (1102) est un trajet passant à travers le premier commutateur (Q1) ;
un deuxième commutateur (Q2) adapté pour commander l'apport d'alimentation en puissance via un deuxième trajet de courant (1104) au circuit de résonance, dans lequel le deuxième trajet de courant (1104) est un trajet passant à travers le deuxième commutateur (Q2) ;
un circuit de commande de transmission de puissance adapté pour rendre conducteurs en alternance les premier et deuxième commutateurs (Q1, Q2) pour amener le circuit de résonance à résonner afin de transmettre une puissance CA de la première bobine (L2) servant de bobine d'alimentation (L2) à la bobine de réception (L3) ;
une deuxième bobine (LSS) adaptée pour générer un courant inductif (ISS) à l'aide d'un champ magnétique généré par la puissance CA ; et
un circuit de détection de phase (1150) adapté pour détecter une différence de phase entre une phase de tension et une phase de courant de la puissance CA, dans lequel le circuit de détection de phase (1150) est adapté pour mesurer la phase du courant inductif (ISS) circulant dans la deuxième bobine (LSS) afin d'obtenir une mesure de la phase de courant du courant CA,
**caractérisé en ce que**
le circuit de commande de transmission de puissance est un oscillateur (1202) adapté pour générer une tension CA à une fréquence de pilotage (f0) ;
l'oscillateur (1202) est adapté pour alimenter en tension CA en alternance le premier commutateur (Q1) et le deuxième commutateur (Q2) ;
la sortie d'oscillateur est connectée à une entrée de circuit de détection de phase ; et
le circuit de détection de phase (1150) est adapté pour mesurer la phase de la tension CA générée par l'oscillateur (1202) afin d'obtenir une mesure de la phase de tension de la puissance CA.

2. Dispositif d'alimentation en puissance sans fil selon la revendication 1, dans lequel
un trajet de courant passant à travers les premier et deuxième commutateurs (Q1, Q2) et un trajet de courant passant à travers le circuit de résonance sont séparés par un transformateur de couplage, et
le circuit de résonance est alimenté en puissance CA à travers le transformateur de couplage.

3. Dispositif d'alimentation en puissance sans fil selon la revendication 1 ou 2, comprenant en outre un circuit de suivi de fréquence de pilotage (1152) adapté pour ajuster la fréquence de pilotage (f0) du circuit de commande de transmission de puissance de façon à réduire la différence de phase détectée pour permettre à la fréquence de pilotage (f0) de suivre la fréquence de résonance (fr).

4. Dispositif d'alimentation en puissance sans fil selon l'une quelconque des revendications 1 à 3, dans lequel
la deuxième bobine (LSS) est enroulée autour d'un noyau toroïdal (1154), et
une partie de la première bobine (L2) est amenée à passer à travers le noyau toroïdal pour constituer un transformateur de couplage par les première et deuxième bobines (L2, LSS).

5. Dispositif d'alimentation en puissance sans fil selon l'une quelconque des revendications 1 à 4, dans lequel
un résistor (R3) est connecté en parallèle aux deux extrémités de la deuxième bobine, et
le circuit de détection de phase (1150) est adapté pour mesurer la phase de courant à partir d'un changement de tension appliqué au résistor (R3).

6. Dispositif d'alimentation en puissance sans fil selon l'une quelconque des revendications 1 à 5, comprenant en outre :
un premier redresseur de forme d'onde (1142) adapté pour convertir une forme d'onde analogique ayant la même phase que celle d'une forme d'onde de courant de la puissance CA en une forme d'onde numérique, dans lequel la deuxième bobine (LSS) est connectée au circuit de détection de phase (1150) à travers le premier redresseur de forme d'onde (1142) ; et
un deuxième redresseur de forme d'onde (1144) adapté pour convertir une forme d'onde analogique ayant la même phase que celle d'une forme d'onde de tension de la puissance CA en une forme d'onde numérique, dans lequel l'oscillateur (1202) est connecté au circuit de détection de phase (1150) à travers le deuxième redresseur de forme d'onde (1144), dans lequel
le circuit de détection de phase (1150) est adapté pour comparer des fronts de deux formes d'onde numériques pour détecter la différence de phase.

7. Dispositif d'alimentation en puissance sans fil pour une alimentation en puissance par voie sans fil d'une bobine d'alimentation (L2) à une bobine de réception (L3) à une fréquence de résonance (fr) de la bobine d'alimentation (L2) et de la bobine de réception (L3), comprenant :
un circuit de puissance (1200) ;
la bobine d'alimentation (L2) ;
une bobine d'excitation (L1) qui est couplée magnétiquement à la bobine d'alimentation (L2) et adaptée pour alimenter en puissance CA provenant du circuit de puissance la bobine d'alimentation (L2) ;
une bobine de détection (LSS) adaptée pour générer un courant inductif (ISS) à l'aide d'un champ magnétique généré par la puissance CA ; et
un circuit de détection de phase (1150) adapté pour détecter une différence de phase entre une phase de tension et une phase de courant de la puissance CA, dans lequel
le circuit de puissance comporte des premier et deuxième trajets de courant (1102, 1104) et rend conducteurs en alternance des premier et deuxième commutateurs (Q1, Q2) connectés en série, respectivement, aux premier et deuxième trajets de courant (1102, 1104) pour alimenter en puissance CA la bobine d'excitation (L1), dans lequel le premier trajet de courant (1102) est un trajet passant à travers le premier commutateur (Q1), dans lequel le deuxième trajet de courant (1104) est un trajet passant à travers le deuxième commutateur (Q2) ; et
le circuit de détection de phase (1150) est adapté pour mesurer une phase du courant inductif (ISS) circulant dans la bobine de détection (LSS) afin d'obtenir une mesure de la phase de courant de la puissance CA,
**caractérisé en ce que**
le circuit de puissance comporte un oscillateur (1202) qui est adapté pour générer une tension CA à une fréquence de pilotage (f0) ;
l'oscillateur (1202) est adapté pour alimenter en tension CA en alternance le premier commutateur (Q1) et le deuxième commutateur (Q2) ;
la sortie d'oscillateur est connectée à une entrée de circuit de détection de phase ; et
le circuit de détection de phase (1150) est adapté pour mesurer la phase de la tension CA générée par l'oscillateur (1202) afin d'obtenir une mesure de la phase de tension de la puissance CA.

8. Dispositif d'alimentation en puissance sans fil selon la revendication 7, dans lequel
la bobine de détection (LSS) est une bobine adaptée pour générer le courant inductif (ISS) à l'aide d'un champ magnétique généré par la puissance CA circulant à travers la bobine d'alimentation (L2).

9. Dispositif d'alimentation en puissance sans fil selon la revendication 7, dans lequel
la bobine de détection (LSS) est une bobine adaptée pour générer le courant inductif (ISS) à l'aide d'un champ magnétique généré par la puissance CA circulant à travers la bobine d'excitation (L1).

10. Dispositif d'alimentation en puissance sans fil selon l'une quelconque des revendications 7 à 9, comprenant en outre un circuit de suivi de fréquence de pilotage (1152) adapté pour ajuster la fréquence de pilotage (f0) d'un circuit de commande de transmission de puissance de façon à réduire la différence de phase détectée pour permettre à la fréquence de pilotage (f0) de suivre la fréquence de résonance (fr).

11. Dispositif d'alimentation en puissance sans fil selon la revendication 7, dans lequel
la bobine de détection (LSS) est enroulée autour d'un noyau toroïdal (1154), et
une partie de la bobine d'excitation (L1) est amenée à passer à travers le noyau toroïdal (1154) pour constituer un transformateur de couplage par la bobine d'excitation (L1) et la bobine de détection (LSS).

12. Dispositif d'alimentation en puissance sans fil selon l'une quelconque des revendications 7 à 11, dans lequel
la bobine de détection (LSS) est enroulée autour d'un noyau toroïdal (1154), et
une partie de la bobine d'alimentation (L2) est amenée à passer à travers le noyau toroïdal (1154) pour constituer un transformateur de couplage par la bobine d'alimentation (L2) et la bobine de détection (LSS).

13. Dispositif d'alimentation en puissance sans fil selon l'une quelconque des revendications 7 à 12, dans lequel
un résistor (R3) est connecté en parallèle aux deux extrémités de la bobine de détection (LSS), et
le circuit de détection de phase (1150) est adapté pour mesurer la phase de courant à partir d'un changement de tension appliqué au résistor (R3).

14. Dispositif d'alimentation en puissance sans fil selon l'une quelconque des revendications 7 à 13, comprenant en outre :
un premier redresseur de forme d'onde (1142) adapté pour convertir une forme d'onde analogique ayant la même phase que celle d'une forme d'onde de courant de la puissance CA en une forme d'onde numérique, dans lequel la bobine de détection (LSS) est connectée au circuit de détection de phase (1150) à travers le premier redresseur de forme d'onde (1142) ; et
un deuxième redresseur de forme d'onde (1144) adapté pour convertir une forme d'onde analogique ayant la même phase que celle d'une forme d'onde de tension de la puissance CA en une forme d'onde numérique, dans lequel l'oscillateur (1202) est connecté au circuit de détection de phase (1150) à travers le deuxième redresseur de forme d'onde (1144), dans lequel
le circuit de détection de phase (1150) est adapté pour comparer des fronts de deux formes d'onde numériques pour détecter la différence de phase.

15. Système de transmission de puissance sans fil comprenant :
un dispositif d'alimentation en puissance sans fil selon la revendication 1 ou 7 ;
la bobine de réception (L3) ; et
une bobine de charge (L4) couplée magnétiquement à la bobine de réception (L3) et adaptée pour recevoir de la puissance que la bobine de réception (L3) a reçu depuis la bobine d'alimentation (L2).
